# EUROPEAN PATENT SPECIFICATION

(11) **EP 4 506 677 B1**
(45) Date of publication and mention of the grant of the patent: **29.04.2026**
(21) Application number: 24785213.0
(22) Date of filing: 03.04.2024
(51) Int. Cl.: G01N 1/40, G01N 1/38, G01N 1/36, G01N 21/84, G01N 35/00, G01N 35/10, G01N 13/00, G01N 21/17

(54) **PRETREATMENT SYSTEM AND PRETREATMENT METHOD FOR TESTING METAL COMPONENTS IN SAMPLE**
VORBEHANDLUNGSSYSTEM UND VORBEHANDLUNGSVERFAHREN ZUR PRÜFUNG VON METALLISCHEN KOMPONENTEN IN EINER PROBE
SYSTÈME DE PRÉTRAITEMENT ET PROCÉDÉ DE PRÉTRAITEMENT POUR TESTER DES COMPOSANTS MÉTALLIQUES DANS UN ÉCHANTILLON

(30) Priority: 03.04.2023 KR 20230043486; 03.04.2023 KR 20230043739; 03.04.2023 KR 20230043740; 03.04.2023 KR 20230043741; 03.04.2023 KR 20230043742; 03.04.2023 KR 20230043743; 03.04.2023 KR 20230043744
(43) Date of publication of application: 12.02.2025
(73) Proprietor: LG Chem, Ltd., Yeongdeungpo-gu Seoul 07336 (KR)
(72) Inventor: KANG, Hosung, Daejeon 34122 (KR); NHO, Hyun Woo, Daejeon 34122 (KR); SHIN, Minhwa, Daejeon 34122 (KR); PARK, Jeseob, Daejeon 34122 (KR); PARK, Se Jung, Daejeon 34122 (KR); LEE, Seojin, Daejeon 34122 (KR); LEE, Minyoung, Daejeon 34122 (KR); JUNG, Min Hwan, Daejeon 34122 (KR); AHN, Minchul, Daejeon 34122 (KR); KIM, Kyeongrak, Daejeon 34122 (KR)
(74) Representative: Plasseraud IP
(86) International application number: PCT/KR2024/004327
(87) International publication number: WO 2024/210510

(56) References cited:
- EP-B1- 2 733 196
- CN-B- 110 658 137
- JP-A- H0 829 432
- JP-A- H0 829 432
- JP-A- H1 164 340
- JP-B2- 4 511 983
- KR-A- 20200 132 434
- KR-B1- 102 366 044
- US-B1- 6 170 980

## Description

### [Technical Field]

The present disclosure relates to a pretreatment system and pretreatment method for testing a metal component in a sample, and a pretreatment system and pretreatment method for testing a metal component in a sample capable of implementing a safe working environment, alleviating worker fatigue caused by the same repetitive work, and reducing an occurrence of measurement errors by automating a pretreatment process using acid which is a toxic substance.

### [Background Art]

Secondary batteries including lithium ions and the like are manufactured by coating a surface of a thin metal plate (foil) such as aluminum or copper with an electrode material that has the ability to transfer electrons. Electrode materials (e.g., cathode materials) are made of numerous small particles, and the electrode materials are intended to include a target amount of various components. However, due to various reasons, in the mass manufacturing process, the content of each component may not be included as much as the target content or may be included in excess of the target content. In particular, the content of metal components in a cathode material has a significant impact on performance of the cathode material. Therefore, the content of the metal component contained in the cathode material should be confirmed, and when the content of the metal component contained in the cathode material is different from the target content, the manufacturing process of the cathode material should be adjusted. Conventionally, in order to test the metal component contained in the cathode material, a pretreatment process of collecting a sample of the cathode material, putting acid to the collected sample of the cathode material to dissolve the sample of the cathode material, and pouring distilled water into the dissolved sample of the cathode material to dilute the dissolved sample was performed. However, since the pretreatment process was performed manually by a worker, there was a safety problem in the working environment due to the acid used in the pretreatment process. In addition, the same preprocessing process was performed repeatedly, increasing worker fatigue, and causing measurement errors. Furthermore, since the worker had to visually check whether the sample was completely dissolved in the acid, the safety issues and measurement errors may occur.

JP H08 29432 A shows an automatic sample preparation and analysis device. CN 110 658 137 B describes metal testing after dissolution. EP 2 733 196 B1 shows a robot with 2 arms & grippers. US 6 170 980 B1 describes dissolution testing including a camera.

The above information disclosed in this Background Art is only for enhancement of understanding of the background of the disclosure and therefore it may contain information that does not form the prior art that is already known in this country to a person of ordinary skill in the art.

### [Disclosure]

### [Technical Problem]

The present disclosure attempts to provide a pretreatment system and pretreatment method for testing a metal component in a sample capable of implementing a safe working environment, alleviating worker fatigue caused by the same repetitive work, and reducing an occurrence of measurement errors by automating a pretreatment process using acid which is a toxic substance.

### [Technical Solution]

According to an exemplary embodiment of the present disclosure, a pretreatment system for testing a metal component in a sample includes: a sample dissolution device configured to input the sample into a tube according to set pretreatment conditions and inject acid into the tube containing the sample to dissolve the sample; a sample dissolution rate detection device configured to detect the dissolution rate of the sample in a sample solution in which the sample is dissolved in the acid; and a dilution device configured to dilute the sample solution in response to the dissolution rate of the sample being greater than or equal to the set dissolution rate.

The pretreatment system may further include a pretreatment condition adjusting device configured to adjust the set pretreatment conditions in response to the dissolution rate of the sample being less than the set dissolution rate.

According to another exemplary embodiment of the present disclosure, a pretreatment system for testing a metal component in a sample includes: a robot including a plurality of arms capable of relative rotation with respect to each other and a foremost arm of the plurality of arms being movable within an operating radius; a gripper device mounted at the foremost arm of the robot and including a first gripper unit for gripping or releasing a dosing head on one side and a second gripper unit for gripping or releasing a tube on the other side; a sample input device including a sample input unit lifting device that includes a dosing head mounted thereon and is movable up and down and a tube holder cup that is disposed below the sample input unit lifting device and includes a tube mounted thereon, and configured to input the sample in the dosing head into the tube mounted on the tube holder cup; an acid injection device configured to inject acid into the tube into which the sample is input from a sample injection device or to inject distilled water into the tube containing the acid in which the sample is dissolved; a heat shaker configured to apply heat to the tube containing the acid mixed with the sample and shake the tube to dissolve the sample in the acid; a vision device acquiring an image of a set portion of a tube containing a sample solution in which the sample is dissolved in the acid; and a pipetting device configured to transfer a portion of the solution in one tube to another tube.

The pretreatment system may further include: a dosing head holder on which a plurality of dosing heads are mounted; a tube holder on which a plurality of tubes, in which a tube cap is coupled to a tube body, are mounted; and a cap opening/closing device configured to separate the tube cap from the tube body or couple the tube cap to the tube body, in which the dosing head holder, the tube holder, the sample input device, the cap opening/closing device, the acid injection device, the heat shaker, the vision device, and the pipetting device may be at least partially disposed within the operating radius of the robot.

The tube holder cup may be disposed on a first weight meter, and an amount of sample input into the tube may be detected by the first weight meter.

The acid injection device may be configured to inject liquid into the tube mounted on the acid injection device while tilting and rotating the tube.

The cap opening/closing device may rotate the tube cap in a first rotation direction to separate the tube cap from the tube body, and rotate the tube cap in a second rotation direction to couple the tube cap to the tube body, and the cap opening/closing device may be configured to raise or lower the tube cap depending on a rotation amount of the tube cap.

The cap opening/closing device may be configured to press the tube cap against the tube body before rotating the tube cap in the second rotation direction.

The heat shaker may include: a shaker unit configured to shake a shaker rod; a heating block positioned on the shaker rod and heating the mounted tube; and an insulating cover spaced apart from a heating block on the heating block and surrounding the heating block, and the tube may be inserted into and mounted on the insulating cover and the heating block.

Before transferring the tube containing the acid mixed with the sample to the heat shaker, the robot may couple the tube cap to the tube body through the cap opening/closing device, and shake the tube to which the tube cap is coupled to mix the sample and the acid.

The pipetting device may transfer a portion of the sample solution in one tube to another tube, the robot may transfer another tube to the acid injection device to contain distilled water in the another tube, and the pipetting device may be configured to inject the distilled water contained in another tube into another tube containing a portion of the sample solution to dilute a portion of the sample solution contained in another tube.

The pretreatment system may further include: a controller controlling an operation of the robot, the gripper device, the dosing head holder, the tube holder, the sample input device, the cap opening/closing device, the acid injection device, the heat shaker, the vision device, and the pipetting device, the controller is configured to receive an image of a set portion of the tube containing the sample solution from the vision device, process the image of the set portion with a preset image processing program, and detect the dissolution rate of the sample.

The gripper device may further include a gripper body rotatably mounted on the foremost arm of the robot, and a first gripper unit may be mounted on one side of the gripper body, and a second gripper unit is mounted on the other side of the gripper body, and the first gripper unit may include: first and second gripping fingers movable toward each other or away from each other; a guide bushing having a cylindrical shape including an open one surface and a closed other surface and fixed within tip portions of each of the first and second gripping fingers; a first pusher or a second pusher disposed on the open one surface of the guide bushing and being slidable along an inner peripheral surface of the guide bushing; a guide shaft extending to one side through a guide shaft hole formed on the closed other surface of the guide bushing and connected to the first pusher or the second pusher; and a guide spring elastically supporting the first pusher or the second pusher with respect to the guide bushing.

The guide shaft may be spaced apart from the inner peripheral surface of the guide bushing, and the guide spring may be disposed between the guide shaft and the guide bushing.

The movement of the first and second pushers and the guide shaft to the other side in an axial direction may be limited by a step formed on the inner peripheral surface of the guide bushing, and the movement of the first and second pushers and the guide shaft to one side in the axial direction may be limited by the other end portion of the guide shaft, and a diameter of the other end portion of the guide shaft may be larger than that of the other portion of the guide shaft.

The second gripper unit may include: third and fourth gripping fingers movable toward or away from each other; first and second tube tong parts provided at tip portions of the third and fourth gripping fingers and having a shape corresponding to the tube to grip the tube; and first and second gripping bar grooves provided at the tip portions of the third and fourth gripping fingers and having a shape corresponding to the gripping bar to grip the gripping bar of the tube holder on which the tube is mounted.

The second gripper unit may further include first and second position limiters protruding upward from the tip portions of the third and fourth gripping fingers to limit movement of the second gripper unit toward the gripping bar.

The controller may be configured to control the robot and the first and second gripper units, in which the controller may control the first and second pushers to press a first mounting button or a second mounting button provided on the dosing head holder or the sample input device, and the robot to move the first gripper unit downward to install the dosing head, and control the first and second pushers to press the first mounting button or the second mounting button and the robot to move the first gripper unit upward to detach the dosing head.

The cap opening/closing device may include: a capping work table having a first tube holder provided on one side thereof and a second tube holder provided on the other side thereof and being rotatable to position one of the first tube holder and the second tube holder in one of a first position where the tube is mounted or gripped and a second position at which the tube cap is coupled to the tube body or the tube cap is separated from the tube body and position the other of the first tube holder and the second tube holder in the other of the first position and the second position; and a support lifting block moving up and down by a cap unit lifting actuator; a cap gripper support rotatably mounted on the support lifting block; first and second cap grippers mounted on the cap gripper support, positioned to correspond to the tube cap of the tube at the second position, and configured to move toward each other to grip the tube cap or move away from each other to dispose the tube cap; first and second tube body grippers configured to be positioned to correspond to the tube body of the tube at the second position, move toward each other to grip the tube body, or move away from each other to dispose the tube body; and a cap rotation actuator mounted on the support lifting block, including a lower end penetrating through the support lifting block and connected to the cap gripper support, and configured to rotate the cap gripper support in a first rotation direction to separate the tube cap from the tube body, and rotate the cap gripper support in a second rotation direction, which is an opposite direction to the first rotation direction, to couple the tube cap to the tube body.

The cap opening/closing device may further include a first exhaust hood configured to be mounted in a position corresponding to the second position to suck gas generated from the liquid in the tube.

The cap opening/closing device may further include a work table rotation actuator configured to rotate the capping work table by 180° to position one of the first and second tube holders in the first position and position the other of the first and second tube holders in the second position.

The cap opening/closing device may further include a sensor configured to detect whether the tube is mounted on the first tube holder or the second tube holder at the first position, whether the tube or the tube cap is mounted on the first tube holder or the second tube holder at the second position, and/or whether the first and second cap grippers grip the tube cap.

The controller may be configured to receive a signal for values detected by the sensor, and control the operation of the work table rotation actuator, the first and second cap grippers, the first and second tube body grippers, the cap unit lifting actuator and/or the cap rotation actuator based on the signal.

When the sensor detects that the tube is mounted on the first tube holder or the second tube holder at the first position and the tube cap is not positioned in the first tube holder or the second tube holder at the second position, the controller may rotate the capping work table by 180° through the work table rotation actuator to move the tube to the second position.

When the sensor detects that the tube is mounted on the first tube holder or the second tube holder at the first position and the tube cap is positioned in the first tube holder or the second tube holder at the second position, the controller may lower the first and second cap grippers through the cap unit lifting actuator to grip the tube cap, and raise the first and second cap grippers again.

When the sensor detects that the tube is not mounted on the first tube holder or the second tube holder at the first position, the tube is mounted on the first tube holder or the second tube holder in the second position, and the first and second cap grippers does not grip the tube cap, the controller may control the first and second cap grippers to grip the tube cap, control the cap rotation actuator to rotate the tube cap coupled to the tube body in a first rotation direction, and control the cap unit lifting actuator to lift the tube cap according to the rotation amount by the cap rotation actuator.

When the sensor detects that the tube is not mounted on the first tube holder or the second tube holder at the first position, the tube is mounted on the first tube holder or the second tube holder at the second position, and the first and second cap grippers grip the tube cap, the controller may control the cap unit lifting actuator to lower the tube cap toward the tube body, control the cap rotation actuator to rotate the tube cap with respect to the tube body in a second rotation direction, and control the cap unit lifting actuator to lower the tube cap according to the rotation amount by the cap rotation actuator.

The controller may control the cap unit lifting actuator to press the tube body with the tube cap at a certain load before rotating the tube cap with respect to the tube body in the second rotation direction.

The acid injection device may include: an acid supply unit including a liquid pumping unit configured to pump liquid contained in a plurality of liquid bottles; an acid injection unit including an acid injection chamber body having an acid injection chamber formed therein, an injection nozzle mounted on the injection nozzle mounting part within the acid injection chamber and configured to communicate with the liquid pumping unit to inject the liquid pumped from the liquid pumping unit into the tube, and a nozzle lifting actuator mounted on the acid injection chamber body and connected to the injection nozzle mounting part to move the injection nozzle mounting part up and down; and a tube loader unit configured to mount the tube thereon, tilt the mounted tube to insert the tube into the acid injection chamber, and rotate the tilted mounted tube, when the tube is tilted and rotates and positioned in the acid injection chamber, and the nozzle lifting actuator may lower the injection nozzle mounting part and position the injection nozzle mounting part on the tube, and the injection nozzle injects the liquid pumped from the liquid pumping unit into the tilted rotating tube.

The acid injection unit may further include: a drain pan provided under the acid injection chamber body; and a funnel movement actuator moving between a first funnel position where a funnel connected to a funnel movement link extending into the acid injection chamber and mounted on the funnel movement link is positioned directly below the injection nozzle to receive the liquid sprayed from the injection nozzle and a second funnel position where the funnel movement link and the funnel do not overlap with the movement of the tube and the movement of the injection nozzle mounting part within the acid injection chamber.

The acid injection unit may further include a second exhaust hood configured to at least partially surround the injection nozzle and suck gas generated from the liquid sprayed from the injection nozzle.

The tube loader unit may include: a support frame extending from a front of the acid injection chamber toward the acid injection chamber; a loader frame rail extending from the support frame along the support frame; a loader frame transfer actuator configured to transfer a loader frame between a first loader position where the tube is mounted or the tube is gripped and a second loader position where the tube is tilted and enter the acid injection chamber; a tilting actuator tilting the tilting frame mounted on the loader frame between the tilted position and an initial position; and a rotating plate rotation actuator configured to rotate a rotating plate rotatably mounted on the tilting frame.

The tube loader unit may further include a third tube holder provided on the rotating plate and having the tube mounted thereon.

The acid injection device may further include a sensor detecting whether the tube is mounted on a third tube holder, whether the loader frame is positioned at the first loader position or the second loader position, and/or whether the tilting frame is in the initial position or tilted to the tilted position.

Each of the plurality of liquid bottles may be disposed on a second weight meter, and the second weight meter may be configured to measure the amount of liquid contained in each of the plurality of liquid bottles.

A front surface of the acid injection chamber body may be open, and the acid injection unit may further include: an acid injection chamber shutter selectively closing an open front surface of the acid injection chamber body; and a shutter actuator configured to close or open the open front surface of the acid injection chamber body with the acid injection chamber shutter.

The pipetting device may include: a pipette tip tray on which a plurality of pipette tips are mounted; a pipetting work table having a first pipette tube holder provided on one side thereof and a second pipette tube holder provided on the other side and being rotatable to position one of the first and second pipette tube holders in one of a first pipette tube position where the tube is mounted or gripped and a second pipette tube position where a solution is collected from the tube or the solution is injected into the tube and position the other of the first and second pipette tube holders in the other of the first and second pipette tube positions; a pipette unit configured to mount a pipette tip at a position corresponding to a pipette tip tray and collect a portion of the solution contained in the first tube at a position equivalent to the pipetting work table or inject the collected solution into the second tube; and a pipette moving unit moving the pipette unit between a position corresponding to the pipette tip tray and a position corresponding to the pipetting work table.

The pipetting device may further include a pipette tip tray transfer unit moving the pipette tip tray toward or away from the pipette unit.

The pipetting device may further include a pipetting work table rotation actuator configured to rotate the pipetting work table by 180° to position one of the first and second pipette tube holders in the first pipette tube position and position the other of the first and second pipette tube holders in the second pipette tube position.

The pipette unit may include: a pipette guide frame connected to the pipette moving unit and moved by the pipette moving unit between a position corresponding to the pipette tip tray and a position corresponding to the pipetting work table; a pipette slider mounted to be slidable in a vertical direction along the pipette guide frame; a pipette module including a pipette module body fixedly mounted on a pipette slider, and a pipette piston relatively movable in a vertical direction with respect to the pipette module body; and a pipette push actuator mounted to be movable in the vertical direction on the pipette slider and configured to press an upper end of the pipette piston.

The pipette piston may be elastically mounted on the pipette module body.

A mounting end portion on which the pipette tip is mounted may be formed at a lower end portion of the pipette piston.

The mounting end may be lowered while pushing the pipette tip downward so that the lower end portion of the pipette tip is immersed in the solution contained in the first tube, and the mounting end may be elastically raised to collect a portion of the solution contained in the first tube while the lower end portion of the pipette tip is immersed in the solution contained in the first tube, and when the solution is contained in the pipette tip, the mounting end may be configured to push the pipette tip downward to inject the solution into the second tube.

The pipetting device may further include a pipette tip ejector configured to detach the pipette tip mounted on the mounting end by pressing the upper end of the pipette piston downward.

A pressing amount applied by the pipette tip ejector to the pipette piston may be greater than a pressing amount applied by the pipette push actuator to the pipette piston.

The metal component test may be performed after dissolving the sample in the tube in the acid to detect the metal component contained in the sample, and the vision device may include: a driving roller and a backup roller configured to mount the tube containing the acid in which the sample is dissolved and rotate the tube; an image acquisition device configured to be mounted between the drive roller and the backup roller to acquire a lower image of the rotating tube; a lighting module configured to irradiate light to the tube from an opposite side to the image acquisition device with respect to the tube; and a controller configured to test the dissolution rate of the sample by processing the lower image of the tube acquired by the image acquisition device. The controller may be configured to detect a tube area in the image of the set portion of the tube through an image feature-based vision algorithm, detect a region of interest by applying a shape recognition algorithm to the tube area, classify pixels within the detected region of interest according to the set reference and assign pixel values to the classified pixels, and detect the dissolution rate of the sample using the pixel values of each pixel.

The vision deice may further include a tube rotation actuator configured to rotate the tube through the driving roller; and a backup roller actuator configured to move the backup roller toward or away from the driving roller.

The vision device may further include a lighting module actuator moves the lighting module between an irradiation position where the lighting module moves towards the tube to irradiate light to the tube and an initial position where the tube is not impeded from being mounted between the driving roller and the backup roller.

The controller may detect the tube area as a circle in the lower image of the tube through circle Hough transform, and cut the tube area using center point coordinates and radius of the circle.

The controller may be configured to set an area according to the object of interest in the tube area through an active contour model, find singular points while gradually narrowing the area, and detect the region of interest from the singular points.

The controller may be configured to classify the pixels in the detected region of interest into two types of pixels according to the set reference and binarize the classified pixels by assigning a pixel value of 0 or 1 to the classified pixels.

The controller may be configured to calculate an average value of brightnesses of all the pixels in the detected region of interest, assign the pixel value of 0 to pixels that are darker than the average value of the brightnesses by a set amount, assign a pixel value of 1 to the remaining pixels, and calculate a ratio of the number of pixels with a pixel value of 1 and the total number of pixels as the dissolution rate.

The controller may be configured to feed back the dissolution rate when the dissolution rate is lower than the set dissolution rate.

The controller may be configured to adjust the component of the acid in which the sample is dissolved, the amount of acid, a time and/or temperature to heat the tube containing the acid in which the sample is dissolved based on the feedback dissolution rate.

According to still another exemplary embodiment of the present disclosure, a pretreatment method for testing a metal component in a sample includes: injecting, by a sample dissolving device, acid into a tube containing the sample according to set pretreatment conditions to dissolve the sample; detecting, by a sample dissolution rate detection device, the dissolution rate of the sample in a sample solution, in which the sample is dissolved in the acid; and diluting, by a dilution device, the sample solution in response to the dissolution rate of the sample being greater than or equal to the set dissolution rate.

The pretreatment method may further include adjusting, by a pretreatment condition adjusting device, the set pretreatment conditions in response to the dissolution rate of the sample being less than the set dissolution rate.

According to still yet another exemplary embodiment of the present disclosure, a pretreatment method for testing a metal component in a sample includes: inputting, by a sample injection device, the sample in a dosing head into a first tube; injecting, by an acid injection device, the acid into the first tube into which the sample is input; shaking, by a heat shaker, the first tube containing the acid in which the sample is dissolved and applying heat; acquiring, by a vision device, an image of the set portion of the first tube; testing, by a controller, a dissolution rate of the sample by processing an image of the set portion of the first tube; and diluting the sample solution in response to the dissolution rate of the sample being greater than or equal to the set dissolution rate.

The pretreatment method may further include: removing the dosing head from a dosing head holder by a robot having a gripper device mounted at a foremost end thereof and mounting the removed dosing head on a sample input unit lifting device; removing the first tube from the tube holder by the robot equipped with the gripper device; separating, by a cap opening/closing device, a tube cap from the first tube; and mounting, by the robot equipped with the gripper device, the first tube, from which the tube cap is separated, on a tube holder cup.

The tube holder cup may be disposed on a first weight meter, and the amount of sample input into the first tube may be detected by the first weight meter.

The acid injection device may be configured to inject liquid into the tube mounted on the acid injection device while tilting and rotating the tube.

The diluting of the sample solution may include: injecting, by the acid injection device, distilled water into the first tube to primarily dilute the sample solution; transferring, by the pipetting device, a portion of the primarily diluted sample solution in the first tube to the second tube; and injecting, by the acid injection device or the pipetting device, distilled water into the second tube to secondarily dilute the sample solution.

The diluting of the sample solution may include: transferring, by the pipetting device, a portion of the sample solution in the first tube to the second tube; injecting, by the acid injection device, distilled water into a second tube to primarily dilute the sample solution; and injecting, by the acid injection device or the pipetting device, distilled water into the second tube to secondarily dilute the sample solution.

The acquiring of the image of the set portion of the first tube may be performed while the first tube containing the acid in which the sample is dissolved rotates.

The testing of the dissolution rate of the sample by processing the image of the set potion of the first tube may include: detecting a tube area in the image of the set portion of the first tube through an image feature-based vision algorithm; applying a shape recognition algorithm to the tube area to detect a region of interest; classifying pixels within the detected region of interest according to the set reference and assigning pixel values to the classified pixels; and detecting the dissolution rate of the sample using the pixel values of each pixel.

The controller may be configured to detect the tube area as a circle in the lower image of the first tube through circle Hough transformation, and cut the tube area using center point coordinates and radius of the circle.

The controller may be configured to set an area according to the object of interest in the tube area through an active contour model, find singular points while gradually narrowing the area, and detect the region of interest from the singular points.

The controller may be configured to classify the pixels in the detected region of interest into two types of pixels according to the set reference and binarize the classified pixels by assigning a pixel value of 0 or 1 to the classified pixels.

The controller may be configured to calculate an average value of brightnesses of all the pixels in the detected region of interest, assign the pixel value of 0 to pixels that are darker than the average value of the brightnesses by a set amount, assign a pixel value of 1 to the remaining pixels, and calculate a ratio of the number of pixels with a pixel value of 1 and the total number of pixels as the dissolution rate.

The pretreatment method may further include adjusting the set pretreatment conditions in response to the dissolution rate of the sample being less than the set dissolution rate.

### [Advantageous Effects]

According to the present disclosure, by automating a pretreatment process using acid, which is a toxic substance, it is possible to implement a safe working environment, alleviate worker fatigue due to the same repetitive work, and reduce an occurrence of measurement errors.

In addition, by automatically checking a dissolution rate of a sample through various image processing methods and reflecting the dissolution rate in a pretreatment process, it is possible to improve accuracy of testing metal components in a sample.

Other effects that may be obtained or are predicted by an exemplary embodiment will be explicitly or implicitly described in a detailed description of an exemplary embodiment. That is, various effects that are predicted according to an exemplary embodiment will be described in the following detailed description.

### [Description of the Drawings]

Embodiments of the present specification may be better understood by referring to the following description in conjunction with the accompanying drawings, where like reference numerals refer to identical or functionally similar elements.
FIG. 1 is a schematic diagram of a pretreatment system for testing a metal component in a sample according to an exemplary embodiment of the present disclosure;
FIG. 2 is a perspective view of a gripper device according to an exemplary embodiment of the present disclosure;
FIG. 3 is a plan view of the gripper device according to the exemplary embodiment of the present disclosure;
FIG. 4 is a cross-sectional view taken along line A-A' of FIG. 3;
FIG. 5 is another perspective view of the gripper device according to the exemplary embodiment of the present disclosure;
FIG. 6 is a schematic diagram illustrating a partial configuration of a dosing head holder according to an exemplary embodiment of the present disclosure;
FIG. 7 is a schematic perspective view of a tube holder according to an exemplary embodiment of the present disclosure;
FIG. 8 is an enlarged view of part B of FIG. 7;
FIG. 9 is a schematic diagram of a sample introduction device according to an exemplary embodiment of the present disclosure;
FIG. 10 is a schematic diagram of a cap opening/closing device according to an exemplary embodiment of the present disclosure;
FIG. 11 is a schematic diagram of a cap opening/closing part according to an exemplary embodiment of the present disclosure;
FIG. 12 is a schematic diagram illustrating a first exhaust hood and first and second tube body grippers according to an exemplary embodiment of the present disclosure;
FIG. 13 is a schematic diagram illustrating a rear portion of an acid injection device according to an exemplary embodiment of the present disclosure;
FIG. 14 is a schematic diagram of an acid injection unit according to an exemplary embodiment of the present disclosure;
FIG. 15 is a perspective view of FIG. 14;
FIG. 16 is a schematic cross-sectional view of the acid injection unit according to the exemplary embodiment of the present disclosure;
FIG. 17 is a schematic diagram of a tube loader unit according to an exemplary embodiment of the present disclosure;
FIG. 18 is a plan view illustrating a state in which a tube is disposed in the tube loader unit according to the exemplary embodiment of the present disclosure;
FIG. 19 is a cross-sectional view taken along line C-C' of FIG. 18;
FIG. 20 is a plan view illustrating a state in which the tube disposed in the tube loader unit according to the exemplary embodiment of the present disclosure is inserted into an acid injection chamber;
FIG. 21 is a cross-sectional view taken along line D-D' of FIG. 20;
FIG. 22 is an enlarged view of part E of FIG. 21;
FIG. 23 is a schematic perspective view of a heat shaker according to an exemplary embodiment of the present disclosure;
FIG. 24 is a schematic cross-sectional view of the heat shaker according to the exemplary embodiment of the present disclosure;
FIG. 25 is a schematic perspective view of a pipetting device according to an exemplary embodiment of the present disclosure;
FIG. 26 is a schematic diagram of a pipette unit according to an exemplary embodiment of the present disclosure;
FIG. 27 is another schematic diagram of a pipette unit according to an exemplary embodiment of the present disclosure;
FIG. 28 is a schematic diagram of a vision device according to an exemplary embodiment of the present disclosure;
FIG. 29 is a schematic perspective view of the vision device according to the exemplary embodiment of the present disclosure;
FIG. 30 is a cross-sectional view taken along line F-F' of FIG. 28;
FIG. 31 is a flowchart of a pretreatment method for testing a metal component in a sample according to an exemplary embodiment of the present disclosure;
FIG. 32 is a flowchart of a method for testing a dissolution rate of a sample according to an exemplary embodiment of the present disclosure;
FIG. 33 are original images of tubes containing samples dissolved in acid;
FIG. 34 is a diagram illustrating images obtained by circle Hough transformation of an original image of FIG. 33;
FIG. 35 is a diagram illustrating images obtained by applying an active contour model to the images in FIG. 34; and
FIG. 36 is a diagram illustrating binarized images of a region of interest in the image of FIG. 35.

It should be understood that the drawings referenced above are not necessarily drawn to scale, and present rather simplified representations of various preferred features illustrating the basic principles of the present disclosure. For example, specific design features of the present disclosure, including specific dimensions, direction, position, and shape, will be determined in part by specific intended applications and use environments.

### [Mode for Invention]

The terminology used herein is for the purpose of describing particular embodiments only, and is not intended to limit the present disclosure. As used herein, singular forms are intended to also include plural forms, unless the context clearly dictates otherwise. The terms "includes" and/or "including" specify the presence of the cited features, integers, steps, operations, elements, and/or components when used herein, but it will also be understood that these terms do not exclude the presence or addition of one or more of other features, integers, steps, operations, elements, components, and/or groups thereof. As used herein, the term "and/or" includes any one or all combinations of the associated listed items.

Additionally, it is understood that one or more of the methods below or aspects thereof may be executed by at least one or more controllers. The term "controller" may refer to a hardware device including a memory and a processor. The memory is configured to store program instructions, and the processor is specifically programmed to execute the program instructions to perform one or more processes described in more detail below. The controller may control operations of units, modules, parts, devices, or the like, as described herein. It is also understood that methods below may be executed by an apparatus including a controller in conjunction with one or more other components, as will be appreciated by those skilled in the art.

In addition, the controller of the present disclosure may be implemented as a non-transitory computer-readable recording medium including executable program instructions executed by a processor. Examples of the computer-readable recording medium include ROM, RAM, compact disk (CD) ROM, magnetic tapes, floppy disks, flash drives, smart cards, and optical data storage devices, but are not limited thereto. The computer-readable recording medium may also be distributed throughout a computer network so that the program instructions may be stored and executed in a distributed manner, for example, on a telematics server or a controller Area Network (CAN).

According to the present disclosure, a robot includes a plurality of arms rotatable with respect to each other, a gripper device is attached to a foremost arm of the plurality of arms, and a dosing head holder, a tube holder, a sample input device, and a cap opening/closing device, an acid injection device, a heat shaker, a pipetting device, and a vision device are disposed within an operating radius of the robot. The robot may freely move the gripper device without limitation within the operating radius of the robot through a plurality of arms. Accordingly, the robot may transfer the dosing head or tube to the dosing head holder, the tube holder, the sample input device, the cap opening/closing device, the acid injection device, the heat shaker, the pipetting device, or the vision device through the gripper device in a preset order and/or preset operation manner. In addition, when the dosing head or tube is transferred to the sample input device, the cap opening/closing device, the acid injection device, the heat shaker, the pipetting device, or the vision device, the sample input device, the cap opening/closing device, the acid injection device, the heat shaker, the pipetting device, or the vision device operates in a preset operation manner. According to the present disclosure, by automating a pretreatment process using acid, which is a toxic substance, without human intervention, it is possible to implement a safe working environment, alleviate worker fatigue due to the same repetitive work, and reduce an occurrence of measurement errors. In addition, by automatically checking a dissolution rate of a sample through various image processing methods and reflecting the dissolution rate in a pretreatment process, it is possible to improve accuracy of testing metal components in a sample.

Hereinafter, exemplary embodiments of the present disclosure will be described in detail with reference to the attached drawings.

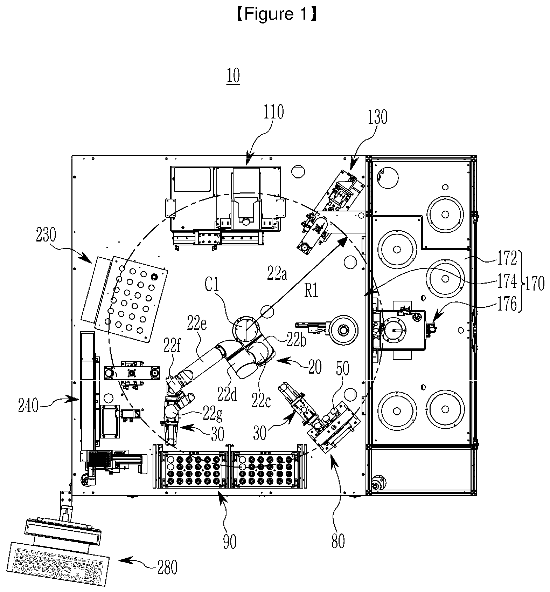

FIG. 1 is a schematic diagram of a pretreatment system for testing a metal component in a sample according to an exemplary embodiment of the present disclosure.

A pretreatment system 10 for testing a metal component in a sample according to an exemplary embodiment of the present disclosure includes a sample dissolution device configured to input a sample into a tube 70 according to set pretreatment conditions and inject acid into the tube 70 containing the sample to dissolve the sample, a sample dissolution rate detection device configured to detect a dissolution rate of the sample in a sample solution in which the sample is dissolved in acid, a dilution device configured to dilute the sample solution in response to the dissolution rate of the sample being greater than or equal to a set dissolution rate, and a pretreatment condition adjustment device configured to adjust the set pretreatment conditions in response to the dissolution rate of the sample being below the set dissolution rate.

As illustrated in FIG. 1, the pretreatment system 10 for testing a metal component in a sample according to another exemplary embodiment of the present disclosure includes a robot 20, a gripper device 30, a dosing head holder 80, and a tube holder 90, a sample input device 110, a cap opening/closing device 130, an acid injection device 170, a heat shaker 230, and a pipetting device 240. Although not illustrated in FIG. 1, the pretreatment system 10 further includes a vision device 290. The robot 20 is fixedly mounted at a center C1 of the pretreatment system 10, and the dosing head holder 80, the tube holder 90, the sample input device 110, the cap opening/closing device 130, the acid injection device 170, the heat shaker 230, the pipetting device 240, and the vision device 290 may be disposed within an operating radius R1 of the robot 20. The pretreatment system 10 further includes a controller 280. The controller 280 may be disposed outside the operating radius R1 of the robot 20. For example, the controller 280 can be physically separated from the robot 20 and disposed remotely.

The sample dissolution device, the sample dissolution rate detection device, the dilution device, and the pretreatment condition adjustment device are components of the pretreatment system 10 divided by function, and the robot 20, the gripper device 30, the dosing head holder 80, the tube holder 90, the sample input device 110, the cap opening/closing device 130, the acid injection device 170, the heat shaker 230, the pipetting device 240, the controller 280, and the vision device 290 are components of the pretreatment system 10 divided by device. Accordingly, the sample dissolution device, the sample dissolution rate detection device, the dilution device, and the pretreatment condition adjustment device may each be implemented by a combination of some or all of the robot 20, the gripper device 30, the dosing head holder 80, the tube holder 90, the sample input device 110, the cap opening/closing device 130, the acid injection device 170, the heat shaker 230, the pipetting device 240, the controller 280, and the vision device 290.

The robot 20 includes a plurality of arms 22a, 22b, 22c, 22d, 22e, 22f, and 22g, and one arm is rotatably connected with respect to another neighboring arm. To this end, at least one actuator is provided at a connection portion of one arm and the other adjacent arm, so that one arm can rotate with respect to the other adjacent arm. For example, the second arm 22b is rotatably connected to the first arm 22a, and an actuator is provided at the connection portion of the first and second arms 22a and 22b to enable the second arm 22b to rotate with respect to the first arm 22a. Similarly, the third arm 22c is rotatably connected to the second arm 22b, and an actuator is provided at the connection portion of the second and third arms 22b and 22c to enable the third arm 22c to rotate with respect to the second arm 22b.

The gripper device 30 is rotatably mounted on the foremost arm 22g of the plurality of arms 22a, 22b, 22c, 22d, 22e, 22f, and 22g. The gripper device 30 may freely move without limitation within the operating radius R1 of the robot 20 through the plurality of arms 22a, 22b, 22c, 22d, 22e, 22f, and 22g included in the robot 20. As the number of arms included in the robot 20 increases, the gripper device 30 may move more freely. Accordingly, in this specification, the robot 20 is illustrated to include seven arms 22a, 22b, 22c, 22d, 22e, 22f, and 22g, but the number of arms included in the robot 20 is not limited to seven and may be adjusted by a designer as needed.

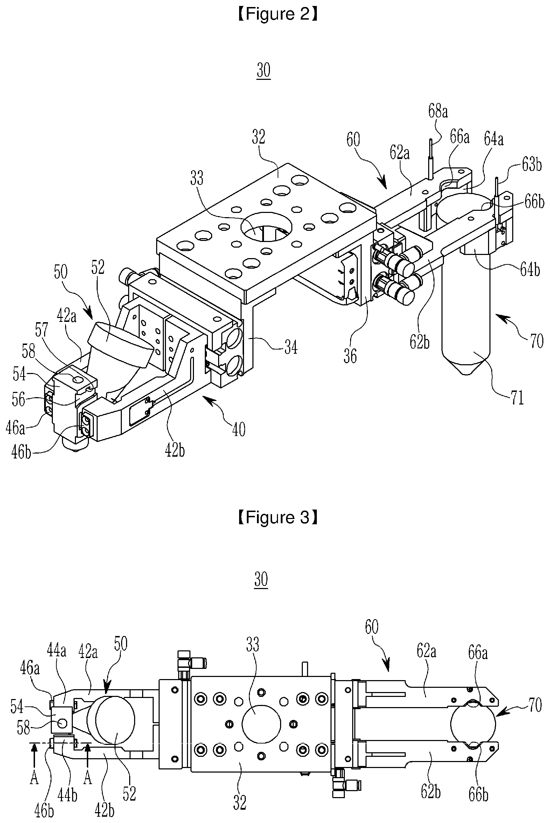

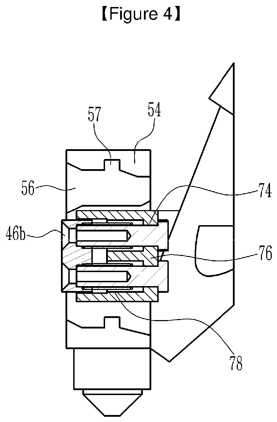

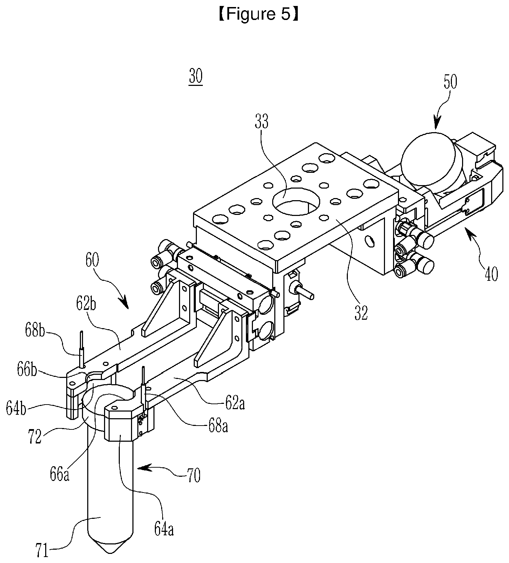

FIG. 2 is a perspective view of a gripper device according to an exemplary embodiment of the present disclosure. FIG. 3 is a plan view of the gripper device according to the exemplary embodiment of the present disclosure. FIG. 4 is a cross-sectional view taken along line A-A' of FIG. 3. FIG. 5 is another perspective view of the gripper device according to the exemplary embodiment of the present disclosure.

As illustrated in FIGS. 2 to 5, the gripper device 30 is mounted on a tip of the robot 20, that is, the foremost arm 22g of the robot 20, and rotates together with the foremost arm 22g, and may move to the dosing head holder 80, the tube holder 90, the sample input device 110, the cap opening/closing device 130, the acid injection device 170, the heat shaker 230, the pipetting device 240, or the vision device 290 by the robot 20 to grip or release a dosing head 50 and/or tube 70. To this end, the gripper device 30 includes a gripper body 32, a first gripper unit 40, and a second gripper unit 60.

The gripper body 32 is mounted on the foremost arm 22g and rotates together with the foremost arm 22g. A gripper body mounting hole 33 is formed in a central portion of the gripper body 32, and the gripper body 32 is mounted on the foremost arm 22g through the gripper body mounting hole 33. The gripper body 32 includes a first gripper unit mounting part 34 on one side, and a second gripper unit mounting part 36 on the other side. A first gripper unit 40 configured to grip or release the dosing head 50 is mounted on the first gripper unit mounting part 34, and a second gripper unit 60 configured to grip or release the tube 70 is mounted on the second gripper unit mounting part 36.

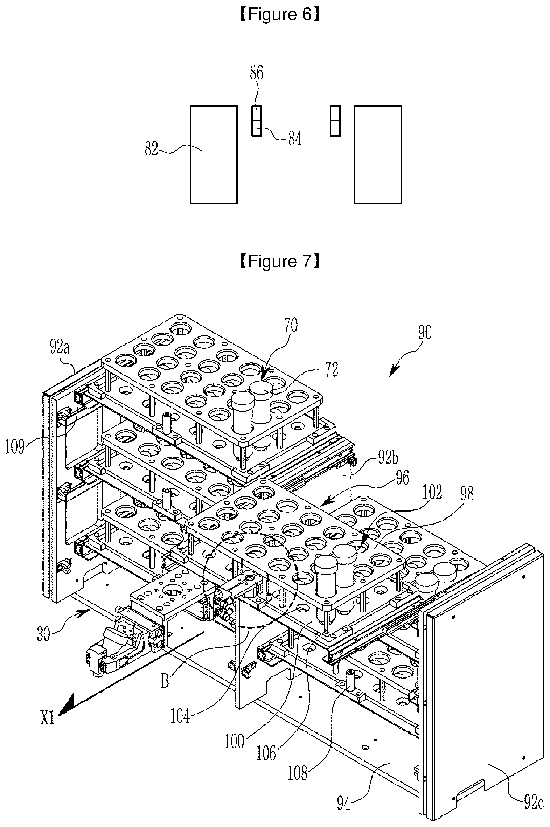

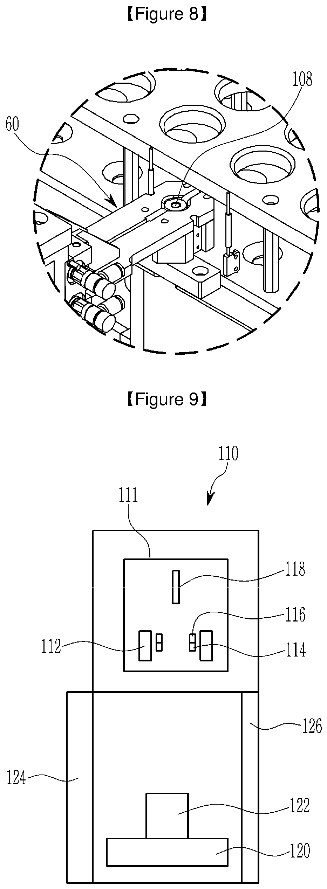

The first gripper unit 40 may be mounted on the first gripper unit mounting part 34, may grip or release the dosing head 50, and is configured to be able to press a first mounting button 82 (see FIG. 6) of the dosing head holder 80 or a second mounting button 112 (see FIG. 9) of the sample input device 110.

The first gripper unit 40 includes first and second gripping fingers 42a and 42b that may move toward or away from each other. The first and second gripping fingers 42a and 42b may move toward each other to grip the dosing head 50 disposed therebetween, and may move away from each other to release the gripped dosing head 50. Here, the dosing head 50 contains a sample for testing metal components therein and includes a sample container unit 52 and a sample supply unit 54. The sample container unit 52 contains a sample, and the sample supply unit 54 is configured to be connected to the sample container unit 52 to selectively discharge the sample contained in the sample container unit 52. To this end, the sample container unit 52 is provided with an elastically supported valve button 58. When the valve button 58 is pressed by an external force, the valve button 58 opens an outlet of the sample supply unit 54 connected to the sample container unit 52 to discharge the sample in the sample container unit 52. When the external force pressing the valve button 58 disappears, the valve button 58 elastically returns to its original position and closes an outlet of the sample supply unit 54. Since dosing header 50 is well known to those skilled in the art, further detailed description will be omitted.

The first and second gripping fingers 42a and 42b are configured to grip both side surfaces of the sample supply unit 54 of the dosing head 50. For example, first and second gripping protrusions 44a and 44b are formed to protrude toward each other on surfaces on which tip portions of the first and second gripping fingers 42a and 42b, respectively, face each other and the first and second gripping protrusions 44a, and 44b are configured to grip both flat side surfaces of the sample supply unit 54.

The dosing head 50 is typically mounted on the dosing head holder 80 or the sample input device 110. To this end, a mounting pin passage 56 and a mounting pin groove 57 extending upward from the mounting pin passage 56 are formed on both side surfaces of the sample supply unit 54 of the dosing head 50. The dosing head holder 80 is provided with a first mounting pin 84 having a first mounting pin tip 86 formed to correspond to the mounting pin passage 56 and the mounting pin groove 57, and the sample input device 110 is provided with a second mounting pin 114 having a second mounting pin tip 116 formed to correspond to the mounting pin passage 56 and the mounting pin groove 57. Accordingly, the first mounting pin 84 or the second mounting pin 114 is inserted into the mounting pin passage 56, and the first mounting pin tip 86 or the second mounting pin tip 116 is inserted into the mounting pin groove 57, so the dosing head 50 is mounted on the dosing head holder 80 or the sample input device 110. That is, the gripper device 30 moves the dosing head 50 horizontally to insert the first mounting pin 84 or the second mounting pin 114 into the mounting pin passage 56 and moves the dosing head 50 down vertically to insert the first mounting pin tip 86 or the second mounting pin tip 116 into the mounting pin groove 57.

In order to remove the dosing head 50 from the dosing head holder 80 or the sample input device 110, the first and second gripping protrusions 44a and 44b of the gripper device 30 grip both flat side surfaces of the sample supply unit 54 and lift the dosing head 50 up vertically to remove the first mounting pin tip 86 or the second mounting pin tip 116 out of the mounting pin groove 57 and move the dosing head 50 horizontally to remove the first mounting pin 84 or the second mounting pin 114 from the mounting pin passage 56.

In addition, in order to minimize the vertical movement of the dosing head 50 by the gripper device 30 during the mounting or removal process of the dosing head 50, first and second pushers 46a and 46b are elastically provided at tips of the first and second gripping fingers 42a and 42b, respectively, and the first mounting button 82 and the second mounting button 112 are mounted on the dosing head holder 80 and the sample input device 110, respectively. When the first and second pushers 46a and 46b press the first mounting button 82 or the second mounting button 112 in the process of mounting or removing the dosing head 50, the first mounting pin 84 or the second mounting pin 114 moves down and the first mounting pin tip 86 or the second mounting pin tip 116 is partially removed from the mounting pin groove 57. Accordingly, it is possible to reduce the amount of vertical movement of the dosing head 50 for mounting or removing the dosing head 50.

In order to reduce the amount of shock that may occur when the first and second pushers 46a and 46b press the first mounting button 82 or the second mounting button 112, a guide bushing 74, a guide shaft 76, and a guide spring 78 are provided within the tip portions of the first and second gripping fingers 42a and 42b

The guide bushing 74 has a cylindrical shape with one side open and the other side closed, and is fixed within the tip portions of the first and second gripping fingers 42a and 42b. The first pusher 46a or the second pusher 46b is slidably disposed along the inner peripheral surface of the guide bushing 74 on one open surface of the guide bushing 74, and a guide shaft hole is formed on the other closed surface of the guide bushing 74. The guide shaft 76 is inserted into the guide shaft hole, extends to one side, and is connected to the first pusher 46a or the second pusher 46b. Accordingly, the guide shaft 76 is axially movable along the guide bushing 74 together with the first pusher 46a or the second pusher 46b. The guide shaft 76 is spaced apart from the inner peripheral surface of the guide bushing 74, and the guide spring 78 is disposed between the guide shaft 76 and the guide bushing 74. The guide spring 78 elastically supports the first pusher 46a or the second pusher 46b with respect to the guide bushing 74. When the first and second pushers 46a and 46b press the first mounting button 82 or the second mounting button 112, the first and second pushers 46a, and 46b move to the other side of the axial direction by reaction together with the guide shaft 76 and the guide spring 78 is compressed. When the force with which the first and second pushers 46a and 46b press the first mounting button 82 or the second mounting button 112 disappears, the first and second pushers 46a and 46b move to one side of the axial direction by the elastic force of the guide spring 78 along with the guide shaft 76, and return to their original positions. The movement of the first and second pushers 46a and 46b and the guide shaft 76 to the other side of the axial direction is limited by a step formed on the inner peripheral surface of the guide bushing 74, and the movement of the first and second pushers 46a and 46b and the guide shaft 76 to one side in the axial direction is limited by the other end portion of the guide shaft 76 which has a relatively large diameter.

The third and fourth gripping fingers 62a and 62b may move toward each other to grip the tube 70 disposed therebetween, and may move away from each other to release the gripped tube 70. Here, the tube 70 includes a tube body 71 whose lower end is closed, and a tube cap 72 that is screwed to an upper portion of a tube body 71 and closes the open upper portion of the tube body 71. The tube body 71 is made of a transparent material so that the inside may be seen, and is made of a material that is resistant to toxic substances such as acids.

First and second tube tong parts 64a and 64b are provided at tip portions of the third and fourth gripping fingers 62a and 62b. The first and second tube tong parts 64a and 64b have a shape corresponding to the tube cap 72 so as to grip the tube cap 72. For example, the first and second tube tong parts 64a and 64b are each formed in a semicircular or arc shape with a diameter that is the same as or very similar to the diameter of the tube cap 72, and are configured to grip the tube cap 72. In one example, the first and second tube tong parts 64a and 64b may each have an arc shape. In addition, the surfaces of the first and second tube tong parts 64a and 64b in contact with the tube cap 72 may be made of an elastic material so that the first and second tube tong parts 64a and 64b may firmly grasp the tube cap 72.

The tip portions of the third and fourth gripping fingers 62a and 62b are further provided with first and second gripping bar grooves 66a and 66b and first and second position limiters 68a and 68b. The first and second gripping bar grooves 66a and 66b have a shape corresponding to the gripping bar 108 (see FIGS. 7 and 8) of the tube holder 90 so that the first and second gripping bar grooves 66a and 66b may grip the gripping bar 108. For example, the first and second gripping bar grooves 66a and 66b are each formed in a semicircular or arc shape with a diameter that is the same as or very similar to the diameter of the gripping bar 108 and are configured to grip the gripping bar 108. In one example, the diameter of the gripping bar 108 may be smaller than the diameter of the tube cap 72, and the first and second gripping bar grooves 66a and 66b may each be semicircular. The first and second position limiters 68a and 68b limit the movement of the second gripper unit 60 toward the gripping bar 108 so that the first and second gripping bar grooves 66a and 66b are positioned at accurate positions corresponding to the gripping bar 108.

FIG. 6 is a schematic diagram illustrating a partial configuration of a dosing head holder according to an exemplary embodiment of the present disclosure.

As illustrated in FIGS. 1 and 6, at least one dosing head 50 may be mounted on the dosing head holder 80. To this end, the dosing head holder 80 includes a plurality of dosing head holders, and one dosing head 50 may be mounted on one dosing head holder. Each dosing head holder includes a pair of first mounting pins 84 extending to the front surface, and a front end of each first mounting pin 84 is formed with a first mounting pin tip 86 that protrudes upward. The dosing head 50 is disposed between a pair of first mounting pins 84, and the first mounting pin 84 is inserted into the mounting pin passage 56 and the first mounting pin tip 86 is inserted into the mounting pin groove 57 so that the dosing head 50 is mounted on the dosing head holder. A first mounting button 82 may be mounted on each dosing head holder. When the first mounting button 82 is pressed, the first mounting button 82 moves the first mounting pin 84 downward to partially remove the first mounting pin tip 86 from the mounting pin groove 57. In this state, the robot 20 slightly raises the first gripper unit 40 so that the first mounting pin tip 86 is completely removed from the mounting pin groove 57, and then withdraws from the dosing head holder 80 to remove the dosing head 50 from the dosing head holder 80.

FIG. 7 is a schematic perspective view of a tube holder according to an exemplary embodiment of the present disclosure.

FIG. 8 is an enlarged view of part B of FIG. 7.

As illustrated in FIGS. 1, 7, and 8, the tube holder 90 includes at least one tube tray 96 that can slide by the gripper device 30, and at least one tube 70 may be mounted on each tube tray 96. FIG. 7 illustrates that the tube trays 96 are disposed in two rows on the tube holder 90, and three tube trays 96 are disposed in each row. However, the number of rows of tube trays 96 and the number of tube trays 96 disposed in each row is not limited thereto.

The tube holder 90 includes a bottom frame 94 and at least two vertical frames. Since FIG. 7 illustrates that two rows of tube trays 96 are disposed, the tube holder 90 of FIG. 7 includes first, second, and third vertical frames 92a, 92b, and 92c. The first, second, and third vertical frames 92a, 92b, and 92c are mounted on the floor frame 94 while being spaced apart from each other. Each of the first, second, and third vertical frames 92a, 92b, and 92c extends upward in the vertical direction.

At least one tube tray 96 is disposed between two adjacent vertical frames to be slidable in a first direction X1. Here, the first direction X1 represents a direction perpendicular to the direction in which the vertical frames are spaced apart. The tube tray 96 includes an upper tray 98, a lower tray 100 disposed spaced apart below the upper tray 98, and at least one tray spacer 106 connecting the upper tray 98 and the lower tray 100 while maintaining a spaced state between the upper tray 98 and the lower tray 100. In one example, a plurality of tray spacers 106 may be disposed spaced apart from each other along the edges of the upper tray 98 and the lower tray 100.

A plurality of first upper tube holes 102 are formed in the upper tray 98, and first lower tube holes 104 corresponding to the plurality of first upper tube holes 102 are formed in the lower tray 100. The tube body 71 is inserted into the first upper tube hole 102, at least a portion of the lower portion of the tube body 71 is inserted into the first lower tube hole 104, and the remainder of the lower portion of the tube body 71 is supported by the first lower tray 100. To this end, a diameter of the lower portion of the tube body 71 decreases as it goes downward, a diameter of the first upper tube hole 102 is larger than a diameter of the middle portion of the tube body 71, and a diameter of the first lower tube hole 104 is smaller than the diameter of the middle portion of the tube body 71.

Sliding rails 109 are mounted on surfaces of two adjacent vertical frames facing each other, and both sides of at least one of the upper tray 98 and the lower tray 100 include a sliding mechanism that is mounted on the sliding rail 109 and can slide in the first direction X1. In one example, the sliding mechanism may be a roller that may roll on a sliding rail 109. However, the sliding mechanism is not limited to a roller and includes various sliding mechanisms that may slide the tube tray 96.

The gripping bar 108 is formed to protrude vertically upward from the lower tray 100. The first and second gripping bar grooves 66a and 66b of the second gripper unit 60 may grip the gripping bar 108 and pull or push the tube tray 96 to slide in the first direction X1. That is, the robot 20 grips the gripping bar 108 with the first and second gripping bar grooves 66a and 66b of the second gripper unit 60 of the gripper device 30 and pulls or pushes the tube tray 96 to slide in the first direction X1. Through this sliding of the tube tray 96, the robot 20 may mount the tube 70 on the tube tray 96 or position the tube tray 96 in a position where it is easy to remove the tube 70 from the tube tray 96. When the robot 20 moves the first and second gripping bar grooves 66a and 66b of the second gripper unit 60 toward the gripping bar 108, the first and second position limiters 68a and 68b provided at the tip portions of the third and fourth gripping fingers 62a and 62b are caught in corners of the upper tray 98 so the second gripper unit 60 may no longer move towards the gripping bar 108. When the first and second position limiters 68a and 68b are caught in the corners of the upper tray 98, the first and second gripping bar grooves 66a and 66b are positioned at exact positions corresponding to the gripping bar 108.

FIG. 9 is a schematic diagram of a sample introduction device according to an exemplary embodiment of the present invention.

As illustrated in FIGS. 1 and 9, the sample input device 110 is configured to transfer a certain amount of the sample contained in the sample container unit 52 of the dosing head 50 to the empty tube 70. The sample input device 110 includes a sample input unit lifting device 111 and a sample input chamber 126.

The dosing head 50 may be mounted on the sample input unit lifting device 111. To this end, the sample input unit lifting device 111 includes a pair of second mounting pins 114 extending to the front surface, and the front end of each second mounting pin 114 is formed with a second mounting pin tip 116 protruding upward. The dosing head 50 is disposed between a pair of second mounting pins 114, and the second mounting pin 114 is inserted into the mounting pin passage 56 and the second mounting pin tip 116 is inserted into the mounting pin groove 57 so that the dosing head 50 is mounted on the sample input unit lifting device 111. The sample input unit lifting device 111 may be equipped with a second mounting button 112. When the second mounting button 112 is pressed, the second mounting button 112 moves the second mounting pin 114 downward to partially remove the second mounting pin tip 116 from the mounting pin groove 57. In this state, the robot 20 slightly lowers the first gripper unit 40 so that the second mounting pin tip 116 is completely inserted into the mounting pin groove 57 and then the dosing head 50 is disposed.

The sample input unit lifting device 111 is lowered toward the sample input chamber 126 so that the dosing head 50 mounted on the sample input unit lifting device 111 is positioned directly above the tube 70. The sample input unit lifting device 111 further includes a valve switch 118 configured to press the valve button 58 of the sample container unit 52. In the state in which the sample input unit lifting device 111 is lowered and the dosing head 50 is positioned directly above the tube 70, the valve switch 118 opens the outlet of the sample supply unit 54 connected to the sample container unit 52 by pressing the valve button 58, and injects a certain amount of the sample in the sample container unit 52 into the empty tube 70. When a certain amount of sample is injected into the tube 70, the valve switch 118 no longer presses the valve button 58 and the outlet of the sample supply unit 54 is closed. In addition, the sample input unit lifting device 111 rises to its original position. When the sample input unit lifting device 111 rises to its original position, the robot 20 may detach the dosing head 50 from the sample input unit lifting device 111 through the second gripper unit 60 and mount the dosing head 50 on the dosing head holder 80 again.

The sample input chamber 126 is positioned below the sample input unit lifting device 111, and an upper surface thereof is open. A sliding door 124 is installed on the front surface of the sample input chamber 126, and the sliding door 124 selectively opens and closes the front surface of the sample input chamber 126. A first gravimeter 120 is mounted in the sample input chamber 126, and a tube holder cup 122 is disposed on the first weight meter 120. The tube 70 may be disposed in the tube holder cup 122. When the tube 70 from which the tube cap 72 is separated is disposed in the tube holder cup 122, the sample input unit lifting device 111 is lowered and the valve switch 118 presses the valve button 58 to open the outlet of the sample supply unit 54 connected to the sample container unit 52 and inject the sample of the sample container unit 52 into the tube 70. The amount of sample input into the tube 70 is detected by the first weight meter 120, and when the amount of sample input into the tube 70 reaches a certain amount, the valve switch 118 closes the outlet of the supply unit 54 without pressing the valve button 58. Thereafter, the sample input unit lifting device 111 rises to its original position, and the robot 20 presses the second mounting button 112 with the first and second pushers 46a and 46b of the first gripper unit 40 to partially remove the second mounting pin tip 116 from the mounting pin groove 57 and slightly raises the first gripper unit 40 to completely remove the second mounting pin tip 116 from the mounting pin groove 57 and remove the dosing head 50 from the sample input unit lifting device 111. Thereafter, the robot 20 mounts the dosing head 50 on the dosing head holder 80 again.

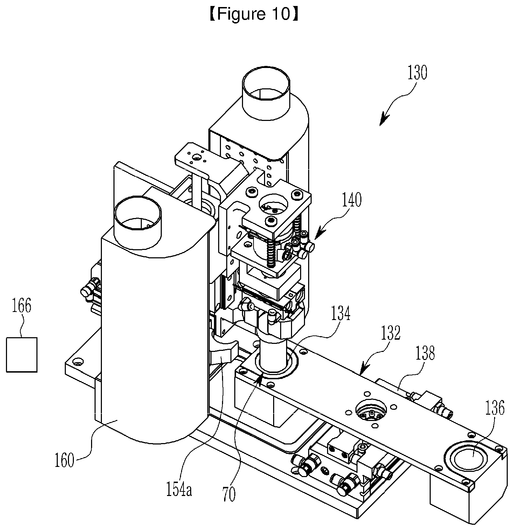

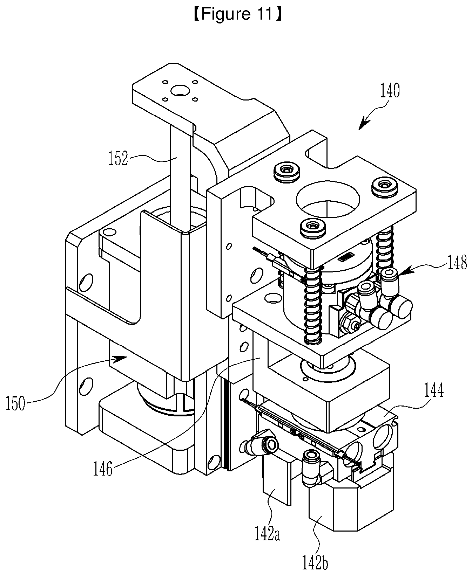

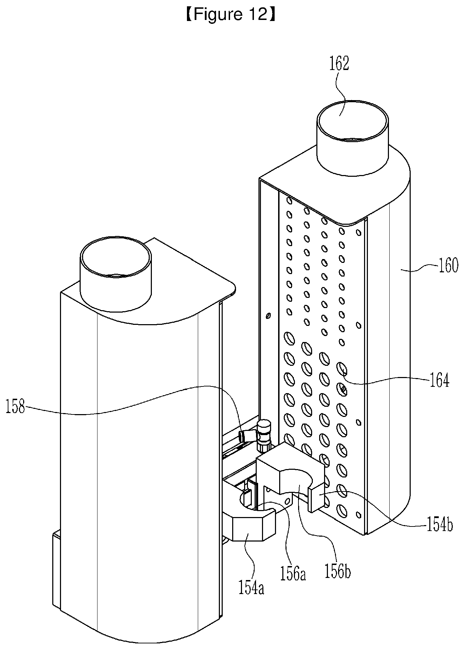

FIG. 10 is a schematic diagram of a cap opening and closing device according to an exemplary embodiment of the present invention. FIG. 11 is a schematic diagram of a cap opening/closing part according to an exemplary embodiment of the present disclosure. FIG. 12 is a schematic diagram illustrating a first exhaust hood and first and second tube body grippers according to an exemplary embodiment of the present disclosure.

As illustrated in FIGS. 1 and 10 to 12, the cap opening/closing device 130 is configured to separate the tube cap 72 from the tube body 71 or couple the tube cap 72 to the upper portion the tube body 71. The cap opening/closing device 130 includes a capping work table 132 and a cap opening/closing unit 140, and selectively further includes a first exhaust hood 160.

The capping work table 132 includes with a first tube holder 134 provided on one side thereof and a second tube holder 136 provided on the other side thereof. The tube 70 can be mounted on the first and second tube holders 134 and 136. The capping work table 132 further includes a work table rotation actuator 138, and the work table rotation actuator 138 rotates the capping work table 132 by 180°. Accordingly, one of the first and second tube holders 134 and 136 is positioned at a first position where the robot 20 mounts the tube 70 or removes the tube 70, and the other of the first and second tube holders 134 and 136 is positioned at a second position where the cap opening/closing unit 140 separates the tube cap 72 from the tube body 71 or the tube cap 72 is coupled to the tube body 71. In this state, when the work table rotation actuator 138 rotates the capping work table 132 by 180°, one of the first and second tube holders 134 and 136 is positioned at the second position and the other of the first and second tube holders 134 and 136 is positioned at the first position.

The cap opening/closing unit 140 is mounted at a position corresponding to the second position, and includes first and second cap grippers 142a and 142b, first and second tube body grippers 154a and 154b, a cap rotation actuator 148, and a cap unit lifting actuator 150.

The first and second cap grippers 142a and 142b are positioned corresponding to the tube cap 72 of the tube 70 mounted on the first tube holder 134 or the second tube holder 136 at the second position, and may move toward each other to grip the tube cap 72 or move away from each other to release the tube cap 72. Surfaces of the first and second cap grippers 142a and 142b facing each other may have a shape corresponding to the outer peripheral surface of the tube cap 72. The first and second cap grippers 142a and 142b are mounted on the cap gripper support 144 rotatably mounted on the support lifting block 146.

The first and second tube body grippers 154a and 154b are positioned corresponding to the tube body 71 of the tube 70 mounted on the first tube holder 134 or the second tube holder 136 at the second position, and may move toward each other to grip the tube body 71 or move away from each other to release the tube body 71. First and second tube body gripper concave grooves 156a and 156b are formed on the surfaces of the first and second tube body grippers 154a and 154b facing each other, and the first and second tube body gripper concave grooves 156a and 156b may have a shape corresponding to the outer peripheral surface of the tube body 71. The first and second tube body grippers 154a and 154b are mounted on the tube body support 158.

The cap rotation actuator 148 is mounted on the support lifting block 146, and the lower end of the cap rotation actuator 148 penetrates through the support lifting block 146 to be connected to the cap gripper support 144. The cap rotation actuator 148 rotates the cap gripper support 144 in the first rotation direction to separate the tube cap 72 from the tube body 71 and rotates the cap gripper support 144 in a second rotation direction opposite to the first rotation direction to couple the tube cap 72 to the tube body 71.

The cap unit lifting actuator 150 is connected to the support lifting block 146 through the cap unit lifting actuator shaft 152 and moves the support lifting block 146 up and down. Accordingly, the cap gripper support 144 mounted on the support lifting block 146, and the first and second cap grippers 142a and 142b mounted on the cap gripper support 144 also move up and down together with the support lifting block 146.

The first exhaust hood 160 is mounted at a position corresponding to the second position and is configured to suck gas generated from toxic substances such as acids in the tube 70. The first exhaust hood 160 has an inlet 164 facing the tube 70 at the second position, and a first outlet 162 for discharging the gas sucked through the inlet 164 to the outside of the pretreatment system 10.

The cap opening/closing device 130 further includes a sensor 166. The sensor 166 detects whether the tube 70 or the tube cap 72 is mounted on the first tube holder 134 or the second tube holder 136 at the second position, whether the tube 70 is mounted on the first tube holder 134 or the second tube holder 136 at the first position, and whether the first and second cap grippers 142a and 142b grip the tube cap 72, and transmits a signal corresponding to the detection to the controller 280.

When the tube 70 is mounted on the first tube holder 134 or the second tube holder 136 at the first position and the tube cap 72 is not positioned on the first tube holder 134 or the second tube holder 136 at the second position, the work table rotation actuator 138 rotates the capping work table 132 by 180° to move the tube 70 to the second position. When the tube 70 is mounted on the first tube holder 134 or the second tube holder 136 at the first position and the tube cap 72 is positioned on the first tube holder 134 or the second tube holder 136 at the second position, the cap unit lifting actuator 150 lowers the first and second cap grippers 142a and 142b to grip the tube cap 72 and raises the first and second cap grippers 142a and 142b again.

When the tube 70 is not mounted on the first tube holder 134 or the second tube holder 136 at the first position, the tube 70 is mounted on the first tube holder 134 or the second tube holder 136 at the second position, and the first and second cap grippers 142a and 142b do not grip the tube cap 72, the controller 280 controls the first and second cap grippers 142a and 142b to grip the tube cap 72, controls the cap rotation actuator 148 to rotate the tube cap 72 coupled to the tube body 71 in the first rotation direction, and controls the cap unit lifting actuator 150 to lift the tube cap 72 according to the amount of rotation by the cap rotation actuator 148. Accordingly, the tube cap 72 is separated from the tube body 71. Thereafter, the work table rotation actuator 138 further rotates the capping work table 132 by 180° to move the tube 70 to the first position, and the controller 280 controls the first and second cap grippers 142a, and 142b to dispose the tube cap 72 in the second position.

When the tube 70 is not mounted on the first tube holder 134 or the second tube holder 136 at the first position, the tube 70 is mounted on the first tube holder 134 or the second tube holder 136 at the second position, and the first and second cap grippers 142a and 142b grip the tube cap 72, the controller 280 controls the cap unit lifting actuator 150 to lower the tube cap 72 toward the tube body 71 and press the tube body 71 with the tube cap 72 with a constant load, controls the cap rotation actuator 148 to rotate the tube cap 72 in the second rotation direction with respect to the tube body 71, and controls the cap unit lifting actuator 150 to lower the tube cap 72 according to the rotation amount by the cap rotation actuator 148. Accordingly, the tube cap 72 is coupled to the tube body 71. After the tube body 71 is pressed with the tube cap 72 at a certain load, the tube cap 72 rotates in the second rotation direction with respect to the tube body 71, so the tube cap 72 is prevented from being obliquely coupled to the tube body 71. Thereafter, the work table rotation actuator 138 further rotates the capping work table 132 by 180° to move the tube 70 to the first position.

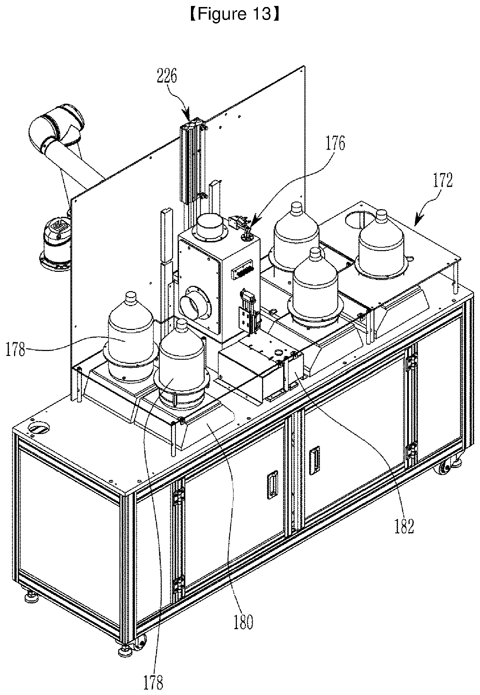

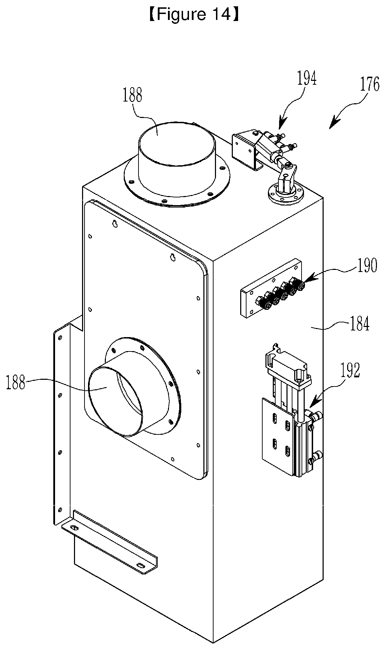

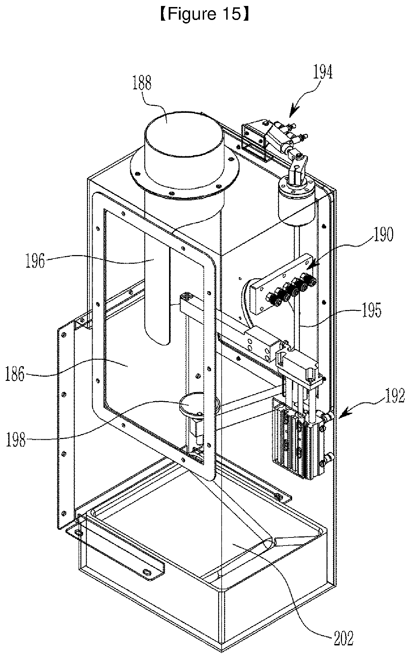

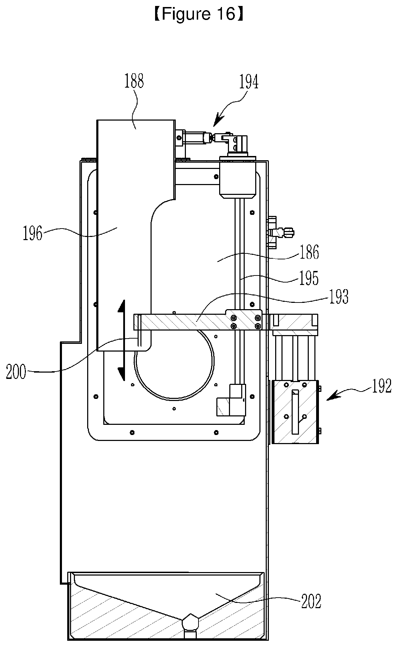

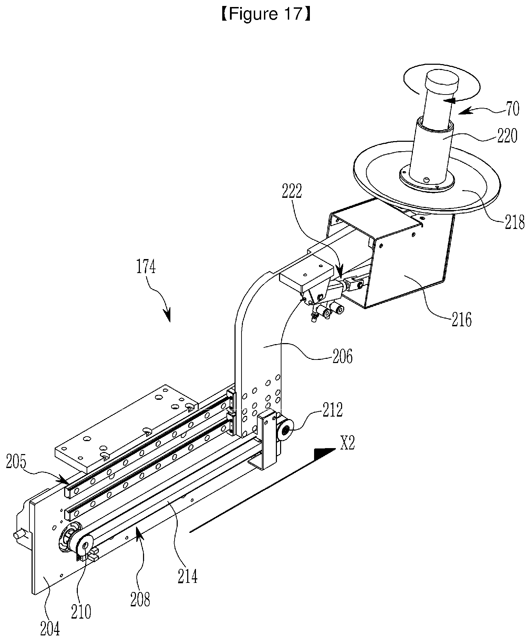

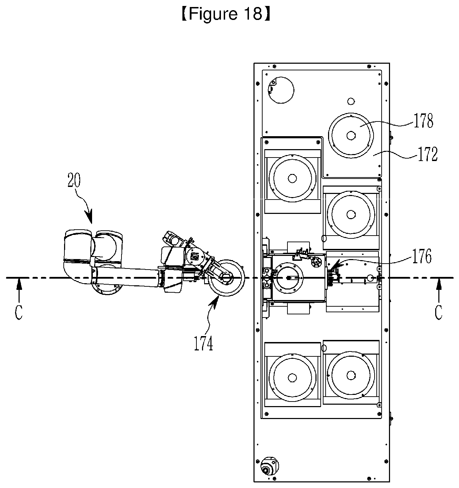

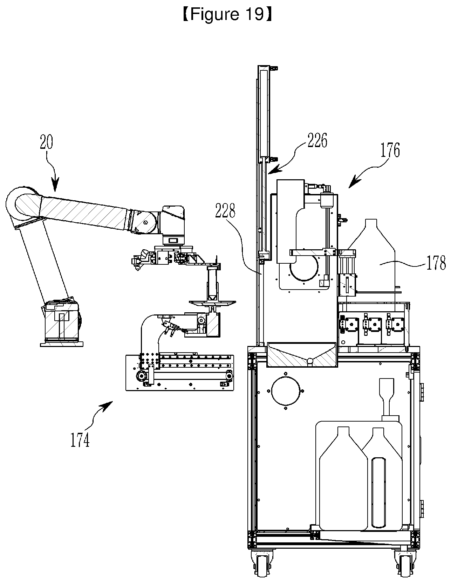

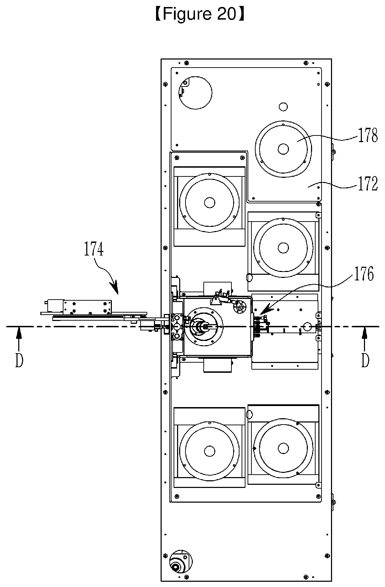

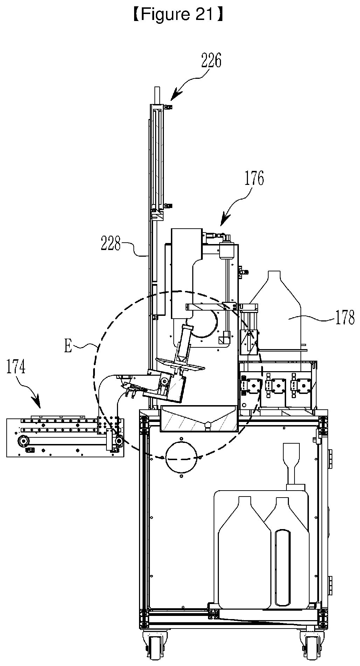

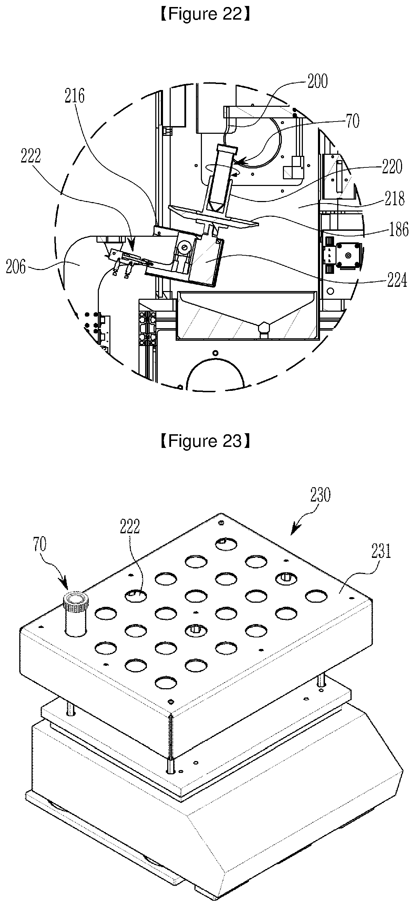

FIG. 13 is a schematic diagram illustrating a rear portion of an acid injection device according to an exemplary embodiment of the present disclosure; FIG. 14 is a schematic diagram of an acid injection unit according to an exemplary embodiment of the present disclosure; FIG. 15 is a perspective view of FIG. 14; FIG. 16 is a schematic cross-sectional view of the acid injection unit according to the exemplary embodiment of the present disclosure; FIG. 17 is a schematic diagram of a tube loader unit according to an exemplary embodiment of the present disclosure; FIG. 18 is a plan view illustrating a state in which a tube is disposed in the tube loader unit according to the exemplary embodiment of the present disclosure; FIG. 19 is a cross-sectional view taken along line C-C' of FIG. 18; FIG. 20 is a plan view illustrating a state in which the tube disposed in the tube loader unit according to the exemplary embodiment of the present disclosure is inserted into an acid injection chamber; FIG. 21 is a cross-sectional view taken along line D-D' of FIG. 20, and FIG. 22 is an enlarged view of part E of FIG. 21.

As illustrated in FIGS. 1 and 13 to 22, the acid injection device 170 is configured to inject acid into the tube 70 to dissolve the sample within the tube 70. In addition, the acid injection device 170 is configured to primarily dilute the sample solution by injecting distilled water into the tube 70 containing acid (hereinafter referred to as 'sample solution') in which the sample is dissolved. The acid injection device 170 includes an acid supply unit 172, a tube loader unit 174, and an acid injection unit 176.

The acid supply unit 172 includes a plurality of liquid bottles 178, and each liquid bottle 178 contains a liquid of a specific component. For example, one liquid bottle 178 may contain acid and the other liquid bottle 178 may contain distilled water. Each liquid bottle 178 is disposed on the second weight meter 180 to measure the amount of liquid contained in the liquid bottle 178. In addition, the amount of liquid supplied from the liquid bottle 178 may be measured through the second weight meter 180. Accordingly, a set amount of liquid may be supplied to the tube 70. The acid supply unit 172 further includes a liquid pumping unit 182 configured to make the plurality of liquid bottles 178 fluidly communicate with the acid injection unit 176. The liquid pumping unit 182 is configured to pump liquid in the liquid bottle 178 and supply the liquid to the acid injection unit 176. In one example, the controller 280 may control the liquid pumping unit 182 to supply a set amount of liquid to the tube 70.

The acid injection unit 176 is disposed near the acid supply unit 172 and is configured to supply the liquid supplied from the acid supply unit 172 to the tube 70 mounted on the tube loader unit 174. The acid injection unit 176 includes an acid injection chamber body 184 with an acid injection chamber 186 formed therein. The acid injection chamber body 184 is provided with an injection nozzle connector 190, a nozzle lifting actuator 192, a funnel movement actuator 194, and a second exhaust hood 196. In addition, a drain pan 202 is provided at the lower portion of the acid injection chamber body 184, so that the liquid sprayed during the process of pre-filling the injection nozzle 200 and/or the injection nozzle mounting part 193 with liquid may be discharged from the drain pan 202. In addition, the front surface of the acid injection chamber body 184 is open, and the open front surface may be selectively closed by the acid injection chamber shutter 228. To this end, the acid injection device 170 further includes a shutter actuator 226. The shutter actuator 226 may close or open the front opening of the acid injection chamber body 184 using the acid injection chamber shutter 228.

The injection nozzle connector 190 is fluidly connected to the liquid pumping unit 182 to receive liquid from the liquid pumping unit 182, and is connected to the injection nozzle 200 to supply the supplied liquid to the injection nozzle 200.

The nozzle lifting actuator 192 may be connected to the injection nozzle mounting part 193 extending into the acid injection chamber 186 to move the injection nozzle mounting part 193 up and down. The injection nozzle 200 is mounted on the injection nozzle mounting part 193, and a passage for supplying liquid to the injection nozzle 200 is formed. The passage is connected to the injection nozzle connector 190 to make the injection nozzle 200 fluidly communicate with the injection nozzle connector 190. When the nozzle lifting actuator 192 moves the injection nozzle mounting part 193 downward, the liquid pumping unit 182 pumps the liquid in the liquid bottle 178 and supplies the liquid to the injection nozzle 200 through the injection nozzle connector 190 and the injection nozzle mounting part 193, and the injection nozzle 200 injects the liquid into the tube 70.

The funnel movement actuator 194 is connected to a funnel movement link 195 extending into the acid injection chamber 186 to move the funnel 198 mounted on the funnel movement link 195 between the first funnel position and the second funnel position. Here, the first funnel position is positioned directly below the injection nozzle 200 and is a position to receive the liquid sprayed from the injection nozzle 200, and the second funnel position is a position where the funnel movement link 195 and the funnel 198 do not overlap with the movement of the tube 70 and the injection nozzle mounting part 193 within the acid injection chamber 186. Before inserting the tube 70 into the acid injection chamber 186 and injecting the liquid into the tube, the funnel movement actuator 194 positions the funnel 198 in a first funnel position, and the controller 280 controls the liquid pumping unit 182 to pre-fill the injection nozzle 200 and the injection nozzle mounting part 193 with liquid. In this process, liquid may be sprayed from the injection nozzle 200 into the funnel 198, and the funnel 198 receives the liquid sprayed from the injection nozzle 200 to prevent the liquid from scattering, and discharges the liquid to the drain pan 202. Before injecting the liquid into the tube 70, by pre-filling the injection nozzle 200 and the injection nozzle mounting part 193 with liquid, gas that may be present in the injection nozzle 200 and the injection nozzle mounting part 193 may be removed and the amount of liquid injected into the tube 70 may be accurately controlled.

The second exhaust hood 196 is configured to at least partially surround the injection nozzle 200 and suck gas generated from the liquid sprayed from the injection nozzle 200. The lower portion of the second exhaust hood 196 is open to suck in the gas, and the upper portion of the second exhaust hood 196 is connected to the second outlet 188 to discharge the sucked gas to the outside of the pretreatment system 10. In addition, a second outlet 188 may be further connected to the acid injection chamber body 184 to discharge gas that is not sucked into the second exhaust hood 196 to the outside of the pretreatment system 10.

The tube loader unit 174 includes a support frame 204, a loader frame 206, a loader frame transfer actuator 208, a tilting frame 216, a tilting actuator 222, a rotating plate 218, and a rotating plate rotation actuator 224.

The support frame 204 extends in a second direction X2 from the front of the acid injection chamber 186 toward the acid injection chamber 186. Here, the second direction X2 is the direction in which the support frame 204 extends. The support frame 204 is provided with a loader frame rail 205 extending along the second direction X2 and the loader frame transfer actuator 208 that may move the loader frame 206 between the first loader position and the second loader position along the loader frame rail 205. Here, the first loader position is a position where the robot 20 may mount the tube 70 on a third tube holder 220 on the rotating plate 218 or grip the tube 70 from the third tube holder 220, and the second loader position is a position where the tilting frame 216 is tilted so that the tube 70 may enter the acid injection chamber 186.

The loader frame transfer actuator 208 includes first and second pulleys 210 and 212 and a belt 214. The first and second pulleys 210 and 212 are rotatably mounted on the support frame 204 along the second direction X2 while being spaced apart from each other. The belt 214 is connected to the first and second pulleys 210 and 212 and can move in the second direction X2 according to the rotation of the first and second pulleys 210 and 212. The loader frame 206 is connected to the belt 214, and the belt 214 may move the loader frame 206 in the second direction X2 between the first loader position and the second loader position.

The loader frame 206 is formed in a set shape, and one end portion of the loader frame 206 is slidably mounted on the loader frame rail 205 and is simultaneously connected to the belt 214. A tilting frame 216 is mounted on the other end portion of the loader frame 206 so that it may be tilted by a set angle, and a tilting actuator 222 is mounted to tilt the tilting frame 216 between the tilted position and the initial position. In one example, the tilting frame 216 is hingedly coupled to the other end portion of the loader frame 206, and the tilting actuator 222 may pull or push the tilting frame 216 relative to the loader frame 206 to rotate the tilting frame 216.

A rotating plate 218 is rotatably mounted on the tilting frame 216, and provided with a rotating plate rotation actuator 224 capable of rotating the rotating plate 218 about its central axis. The third tube holder 220 is provided on the rotating plate 218, and the tube 70 may be mounted on the third tube holder 220.

The acid injection device 170 may further include a sensor that detects whether the tube 70 is mounted on the third tube holder 220, whether the loader frame 206 is positioned at the first loader position or the second loader position, and the tilting frame 216 is at the initial position or is tilted to a tilted position. The sensor may transmit a signal for the detected information to the controller 280. For example, when the loader frame 206 is positioned at the first loader position, the controller 280 mounts the tube 70 on the third tube holder 220 through the robot 20. When the tube 70 is mounted on the third tube holder 220, the controller 280 moves the loader frame 206 to the second loader position through the loader frame transfer actuator 208. When the loader frame 206 is positioned at the second loader position, the controller 280 tilts the tilting frame 216 to the tilted position through the tilting actuator 222. When the tilting frame 216 is tilted to the tilted position, the controller 280 lowers the injection nozzle 200 onto the tube 70 through the nozzle lifting actuator 192, rotates the rotation plate 218 through the rotating plate rotation actuator 224, and injects liquid (e.g., acid or distilled water) into tube 70 through injection nozzle 200.

According to the present disclosure, the liquid is injected into the tube 70 while the tube 70 is tilted at a set angle and rotates about the tilted central axis, so the liquid flows along the inner wall of the tube 70 and mixes with the sample. Therefore, it is possible to prevent the liquid from falling directly on the sample and scattering the sample. In addition, since the tube 70 is rotating, the liquid injected into the tube 70 flows along the entire inner wall of the tube 70. Accordingly, the sample buried on the inner wall of the tube 70 also flows down along with the liquid.

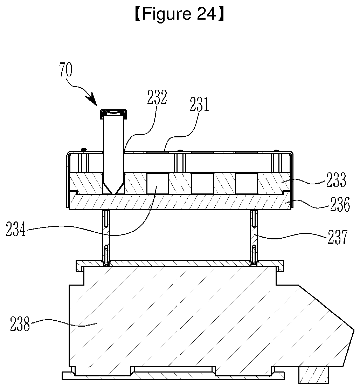

FIG. 23 is a schematic perspective view of a heat shaker according to an exemplary embodiment of the present disclosure. FIG. 24 is a schematic cross-sectional view of the heat shaker according to the exemplary embodiment of the present disclosure.

As illustrated in FIGS. 1, 23, and 24, the heat shaker 230 is configured to mount the tube 70 containing the sample mixed with the liquid, apply heat to the tube 70, and shake the tube 70 to dissolve the sample in the liquid. The heat shaker 230 includes a shaker unit 238, a shaker rod 237, a heating block 233, a heating plate 236, and an insulating cover 231.

The shaker unit 238 is configured to shake the shaker rod 237, and a heating plate 236 is mounted on the shaker rod 237, and a heating block 233 is mounted on the heating plate 236. In addition, an insulating cover 231 is mounted on the heating block 233 to surround the heating plate 236 and the heating block 233. At least one second upper tube hole 232 is formed in the insulating cover 231, and at least one second lower tube hole 234 corresponding to the at least one second upper tube hole 232 is formed in the heating block 233. The lower portion of the tube 70 is inserted into the second upper tube hole 232 and the second lower tube hole 234 and disposed on the heating plate 236. In order to stably mount the tube 70 inserted into the second upper tube hole 232 and the second lower tube hole 234, the insulating cover 231 is disposed spaced apart from the heating block 233. The heating plate 236 and the heating block 233 generate heat and transfer the heat to the tube 70. At the same time as heating the sample mixed with the liquid in the tube 70 through the heating plate 236 and the heating block 233, the shaker unit 238 shakes the tube 70 through the shaker rod 237 to dissolve the sample in the liquid (e.g., acid).

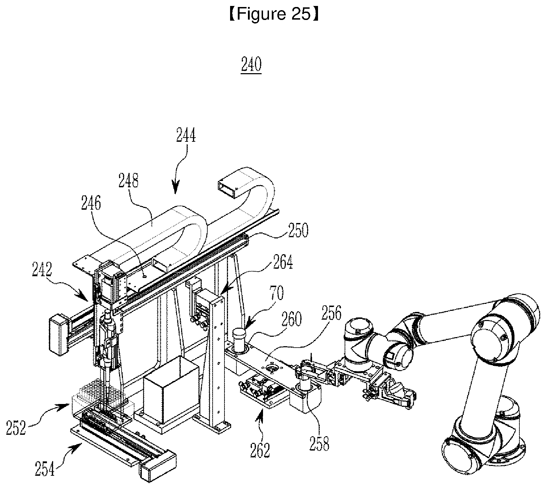

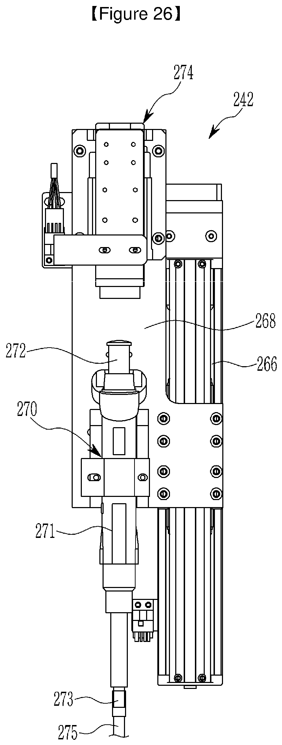

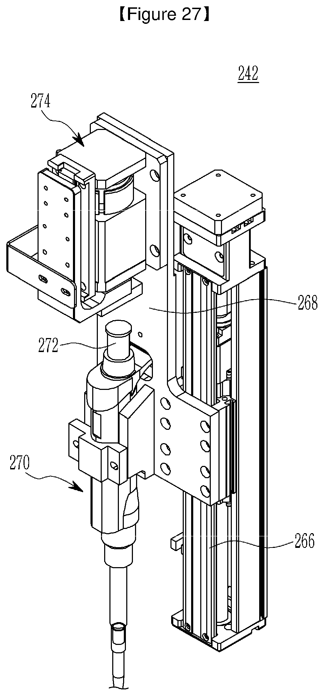

FIG. 25 is a schematic perspective view of a pipetting device according to an exemplary embodiment of the present disclosure. FIG. 26 is a schematic diagram of a pipette unit according to an exemplary embodiment of the present disclosure. FIG. 27 is another schematic diagram of a pipette unit according to an exemplary embodiment of the present disclosure.

As illustrated in FIGS. 1 and 25 to 27, the pipetting device 240 is configured to transfer a portion of the solution in one tube 70 to another tube 70. The pipetting device 240 includes a pipette tip tray 252, a pipette tip tray transfer unit 254, a pipetting work table 256, a pipette unit 242, a pipette moving unit 244, and a pipette tip ejector 264. The pipette tip tray 252 is disposed on one side of the pipette unit 242, and the pipetting work table 256 is disposed on the other side of the pipette unit 242.

A plurality of unused pipette tips 275 may be mounted on the pipette tip tray 252, and may move toward or away from the pipette unit 242 by the pipette tip tray transfer unit 254. When the pipette tip tray 252 is positioned near the pipette unit 242, the pipette unit 242 moves downward to load the pipette tip 275. Here, the pipette tip 275 is formed in a generally cylindrical shape with its upper and lower ends open, and the lower portion gradually decreases in diameter as it goes down.

The pipetting work table 256 has the first pipette tube holder 258 provided on one side thereof and the second pipette tube holder 260 provided on the other side thereof. The tube 70 may be mounted on the first and second pipette tube holders 258 and 260. The pipetting work table 256 further includes a pipetting work table rotation actuator 262, and the pipetting work table rotation actuator 262 rotates the pipetting work table 256 by 180°. Accordingly, one of the first and second pipette tube holders 258 and 260 is positioned at the first pipette tube position, and at the first pipette tube position, the robot 20 may mount the tube 70 on one of the first and second pipette tube holders 258 and 260 or grip the tube 70 at the first pipette tube position, the other of the first and second pipette tube holders 258 and 260 is positioned at the second pipette tube position, and at the second pipette tube position, the pipette unit 242 may collect a solution from the tube 70 at the second pipette tube position or inject a solution into the tube 70 at the second pipette tube position. Accordingly, one of the first and second pipette tube holders 258 and 260 is positioned at the first pipette tube position, and the robot 20 mounts one tube 70 in one of the first and second pipette tube holders 258 and 260, the pipetting work table rotation actuator 262 rotates the pipetting work table 256 by 180° and positions one of the first and second pipette tube holders 258 and 260 in the second pipette tube position and positions the other of the first and second pipette tube holders 258 and 260 in the first pipette tube position, the pipette unit 242 collects a portion of the solution in one tube 70, the robot 20 mounts the other tube 70 on the other of the first and second pipette tube holders 258 and 260, the pipetting work table rotation actuator 262 rotates the pipetting work table 256 by 180° again and positions one of the first and second pipette tube holders 258 and 260 in the first pipette tube position and positions the other of the first and second pipette tube holders 258 and 260 in the second pipette tube position, and the pipette unit 242 injects a portion of the collected solution into another tube 70. Through this process, a portion of the solution in one tube 70 is transferred to another tube 70. In addition, when the distilled water is present in one tube 70, the solution in the other tube 70 may be diluted.

The pipette unit 242 is mounted with a pipette tip 275 at a position corresponding to the pipette tip tray 252 provided on one side thereof, and is configured to collect the solution in one tube 70 or inject the collected solution into the other tube 70 at a position corresponding to the pipetting work table 256 provided on the other side thereof. The pipette unit 242 includes a pipette guide frame 266, a pipette slider 268, a pipette module 270, and a pipette push actuator 274.

The pipette guide frame 266 is connected to the pipette moving unit 244 and moves by the pipette moving unit 244 between a position corresponding to the pipette tip tray 252 and a position corresponding to the pipetting work table 256. The pipette guide frame 266 extends in a vertical direction.

The pipette slider 268 is mounted on the pipette guide frame 266 and can slide in the vertical direction along the pipette guide frame 266.

The pipette module 270 is mounted on the pipette slider 268 and moves in the vertical direction together with the pipette slider 268. The pipette module 270 includes a pipette module body 271 that is fixedly mounted on the pipette slider 268, and a pipette piston 272 that is relatively movable in a vertical direction with respect to the pipette module body 271. The pipette piston 272 is elastically mounted on the pipette module body 271. The pipette piston 272 is provided with a mounting end portion 273 on which the pipette tip 275 is mounted at its lower end portion. When the pipette slider 268 moves downward while the pipette unit 242 is positioned at a position corresponding to the pipette tip tray 252, the mounting end portion 273 of the pipette piston 272 is inserted into one of the pipette tips 275 mounted on the pipette tip tray 252, so the pipette tip 275 is mounted on the mounting end portion 273. Thereafter, the pipette slider 268 is raised to its original position with the pipette tip 275 mounted on the mounting end portion 273.

The pipette push actuator 274 is positioned above the pipette piston 272 and is mounted to be movable in the vertical direction on the pipette slider 268. When the pipette push actuator 274 moves downward and presses the upper end of the pipette piston 272, the pipette piston 272 moves downward relative to the pipette module body 271 and pushes the pipette tip 275 mounted on the mounting end portion 273 in the downward direction. When the pipette tip 275 contains a solution, the mounting end portion 273 pushes the pipette tip 275 downward to discharge the solution contained in the pipette tip 275. When the pipette push actuator 274 moves upward and the force pressing the pipette piston 272 disappears, the pipette piston 272 elastically mounted on the pipette module body 271 moves upward and pulls the pipette tip 275 mounted on the mounting end portion 273 upward. In order to collect the solution contained in the tube 70 with the pipette tip 275, the pipette slider 268 moves downward while the mounting end portion 273 pushes the pipette tip 275 downward to immerses the lower portion of the pipette tip 275 in the solution contained in tube 70. In this state, when the pipette push actuator 274 is moved upward, the pipette tip 275 mounted on the mounting end portion 273 is pulled upward and the solution in the tube 70 is collected.

The pipette moving unit 244 moves the pipette unit 242 between a position corresponding to the pipette tip tray 252 and a position corresponding to the pipetting work table 256. The pipette moving unit 244 includes a pipette rail 250, an orbital seat 246, and an orbit 248. However, only one form of the pipette moving unit 244 is illustrated here, and the pipette moving unit 244 is not limited to the form illustrated here.

The pipette rail 250 extends from one side where the pipette tip tray 252 is positioned to the other side where the pipetting work table 256 is positioned. A pipette guide frame 266 is mounted on the pipette rail 250 so that it can slide along the pipette rail 250.

The orbital seat 246 extends from one side to the other side on the pipette rail 250.

One end of the orbit 248 is fixed to the orbit holder 246, and the other end portion thereof is connected to the pipette guide frame 266. The orbit 248 includes a plurality of joints, where one joint is bent or straightened relative to the other joint, and the position of the other end of the orbit 248 relative to the position of one end of the orbit 248 is controlled.

The pipette tip ejector 264 is positioned between one side where the pipette tip tray 252 is positioned and the other side where the pipetting work table 256 is positioned. The pipette tip ejector 264 may extend to the pipette unit 242 at a corresponding position and press the upper end of the pipette piston 272 downward. When the pipette tip ejector 264 moves downward and presses the upper end of the pipette piston 272, the pipette piston 272 moves downward relative to the pipette module body 271 and pushes the pipette tip 275 mounted on the mounting end portion 273 in the downward direction. In this case, the amount of pressure with which the pipette tip ejector 264 presses the pipette piston 272 is large, so the pipette tip 275 is detached from the mounting end portion 273.

In order for the pipette tip ejector 264 to push the upper end of the pipette piston 272, the pipette tip ejector 264 is positioned between the upper end of the pipette piston 272 and the lower end of the pipette push actuator 274 in a vertical direction. As described above, the vertical position of the upper end of the pipette piston 272 and the vertical position of the lower end of the pipette push actuator 274 may change, so when the pipette unit 242 moves along the pipette rail 250, the pipette tip ejector 264 may collide with the pipette piston 272 or the pipette push actuator 274. To prevent such collisions, the controller 280 may allow the movement of the pipette unit 242 along the pipette rail 250 only when the pipette slider 268 is in the preset vertical position and the pipette push actuator 274 is in the preset vertical position.

Meanwhile, the pipette push actuator 274 can detach the pipette tip 275 from the mounting end portion 273 by adjusting the operating amount of the pipette push actuator 274 without providing a separate pipette tip ejector 264.

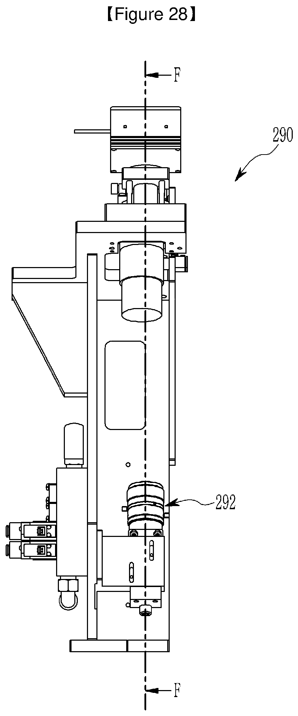

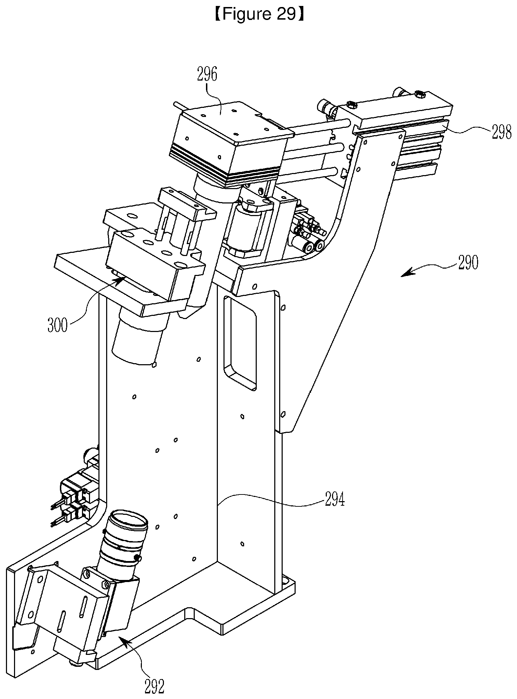

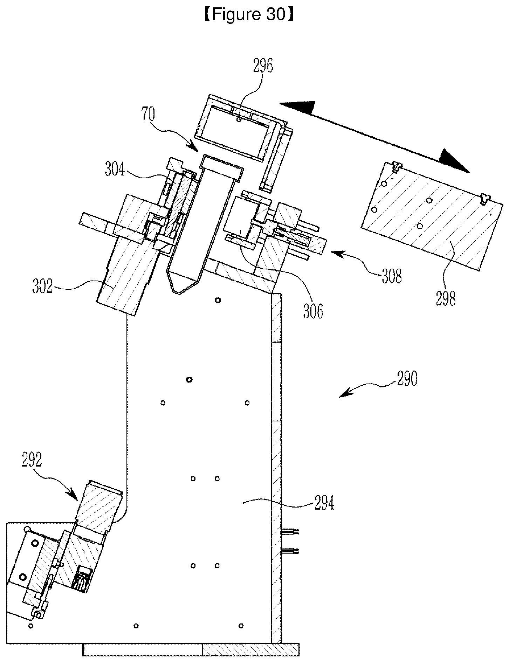

FIG. 28 is a schematic diagram of a vision device according to an exemplary embodiment of the present disclosure. FIG. 29 is a schematic perspective view of the vision device according to the exemplary embodiment of the present disclosure. FIG. 30 is a cross-sectional view taken along line F-F' of FIG. 28.

As illustrated in FIGS. 28 to 30, the vision device 290 is configured to inspect the dissolution rate of the sample by processing the image of the set portion of the tube 70 containing the sample solution through a preset image processing program. In one example, the set portion of the tube 70 may be the lower portion of the tube 70, but the present disclosure is not limited thereto. The vision device 290 includes a vision frame 294, an image acquisition device 292, a lighting module 296, a lighting module actuator 298, a driving roller 304, a backup roller 306, a tube rotation actuator 300, and a backup roller actuator 308. The vision frame 294 is equipped with an image acquisition device 292, and the vision frame 294 includes a lighting module 296, a lighting module actuator 298, a driving roller 304, a backup roller 306, a tube rotation actuator 300, and a backup roller actuator 308.

The image acquisition device 292 is configured to acquire the image of the set portion of the tube 70 containing the sample solution. To this end, the image acquisition device 292 may be mounted at a position on the vision frame 294 appropriate for acquiring the image of the set portion of the tube 70. In one example, the image acquisition device 292 may be mounted under the vision frame 294 to acquire the lower image of the tube 70. The image of the set portion of the tube 70 acquired by the image acquisition device 292 is transmitted to the controller 280 and processed through a preset image processing program.

The lighting module 296 irradiates light to the tube 70 to facilitate the image acquisition device 292 to acquire the image of the set portion of the tube 70. The lighting module 296 may be mounted at the position on the vision frame 294 appropriate for radiating light to the tube 70. In one example, when the image acquisition device 292 acquires the lower image of the tube 70, the lighting module 296 may be mounted over the vision frame 294.

The lighting module actuator 298 moves the lighting module 296 toward the tube 70 to provide an irradiation position for irradiating light to the tube 70 and moves the lighting module 296 away from the tube 70 to provide an initial position that does not interfere with the mounting of the tube 70. The lighting module 296 is positioned away from the driving roller 304 and the backup roller 306 in the initial position so as not to interfere with the robot 20 mounting the tube 70 between the driving roller 304 and the backup roller 306. When the tube 70 is mounted between the driving roller 304 and the backup roller 306 and the robot 20 moves away, the lighting module actuator 298 moves the lighting module 296 to the irradiation position.

The driving roller 304 can rotate at the set position on the vision frame 294, and the backup roller 306 can move toward or away from the driving roller 304. By positioning the tube 70 between the driving roller 304 and the backup roller 306 and moving the backup roller 306 toward the driving roller 304, the tube 70 is mounted between the driving roller 304 and the backup roller 306.

The driving roller 304 can rotate by the tube rotation actuator 300. In one example, the tube rotation actuator 300 may include, but is not limited to, a tube rotation motor 302. In the state in which the tube 70 is mounted between the driving roller 304 and the backup roller 306, the tube rotation actuator 300 rotates the driving roller 304 to rotate the tube 70. Accordingly, the backup roller 306 also rotates. When the tube 70 rotates, the sample precipitated in the acid within the tube 70 is evenly dispersed, so the dissolution rate of the sample may be accurately tested.

The backup roller 306 moves toward or away from the driving roller 304 by the backup roller actuator 308. The backup roller actuator 308 may push the backup roller 306 toward driving roller 304 to increase friction between the driving roller 304, the tube 70, and the backup roller 306. Accordingly, the tube 70 is stably mounted, and the tube 70 may rotate smoothly by the driving roller 304

The controller 280 is connected to a robot 20, a gripper device 30, a sample input device 110, a cap opening/closing device 130, an acid injection device 170, a heat shaker 230, a pipetting device 240, and a vision device 290 via a wirelessly or wired manner to control the operation of the vision device 290 to operate the robot 20 in a wireless or wired manner, and controls the operations of the gripper device 30, the sample input device 110, the cap opening/closing device 130, the acid injection device 170, the heat shaker 230, the pipetting device 240, and the vision device 290. To this end, the controller 280 may be implemented with one or more processors operated by a set program, and the memory of the controller 280 stores program commands programmed to perform each step of the pretreatment method for testing metal components in a sample and the dissolution rate test method for a sample according to an embodiment of the present invention through the one or more processors.

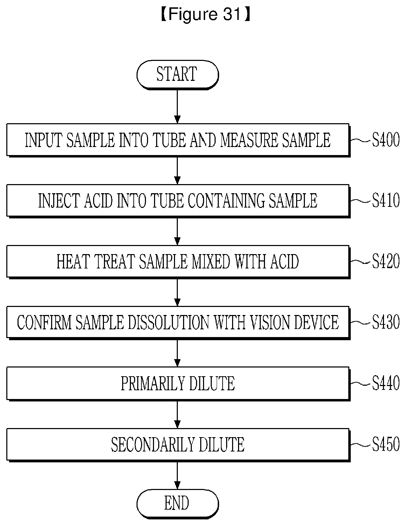

Hereinafter, a pretreatment method for testing a metal component in a sample according to an exemplary embodiment of the present disclosure will be described in detail with reference to FIG. 31.

FIG. 31 is a flowchart of a pretreatment method for testing a metal component in a sample according to an exemplary embodiment of the present disclosure.

As illustrated in FIG. 31, the pretreatment method for testing a metal component in a sample according to an exemplary embodiment of the present disclosure includes first inputting a sample into a tube 70 according to set pretreatment conditions, injecting acid into the tube 70 containing the sample, and dissolving the sample. Here, the set pretreatment conditions may include the components of the acid in which the sample is dissolved, the amount of acid, the time and/or the temperature for the heat shaker 230 to heat the tube 70 containing the acid in which the sample is dissolved.

More specifically, the pretreatment method starts in the state where the plurality of dosing heads 50 containing samples are mounted on the dosing head holder 80, the plurality of empty tubes 70 are mounted on the tube holder 90, and the plurality of unused empty tubes 70 are mounted on the pipette tip tray 252.

The robot 20 equipped with the gripper device 30 at the foremost moves to the dosing head holder 80, removes the dosing head 50, and moves to the sample input device 110 to mount the removed dosing head 50 on the sample input unit lifting device 111. In this case, the first and second pushers 46a and 46b of the first gripper unit 40 press the second mounting button 112 provided on the sample input unit lifting device 111, move slightly downward, and insert the second mounting pin tip 116 into the mounting pin groove 57, and then the first gripper unit 40 mounts the dosing head 50.

In addition, the robot 20 moves to the tube holder 90 to remove the first tube 70 from the tube holder 90 using the second gripper unit 60, and mounts the first tube 70 in the tube holder cup 122 on the first weight meter 120 of the sample input device 110 to check whether the first weight meter 120 operates normally. When it is determined that the first weight meter 120 is operating normally, the robot 20 removes the first tube 70 from the tube holding cup 122 and moves the first tube 70 to the cap opening/closing device 130 to be mounted on one of the first and second tube holders 134 and 136.

The work table rotation actuator 138 rotates the capping work table 132 by 180° so the first tube 70 mounted on one of the first and second tube holders 134 and 136 moves to the second position. The sensor 166 detects that the first tube 70 is not mounted on the first tube holder 134 or the second tube holder 136 at the first position, the first tube 70 is mounted on the first tube holder 134 or the second tube holder 136 at the second position, and the first and second cap grippers 142a and 142b do not grip the tube cap 72, and the controller 280 controls the first and second cap grippers 142a and 142b to grip the tube cap 72, controls the cap rotation actuator 148 to rotate the tube cap 72 coupled to the tube body 71 in the first rotation direction, and controls the cap unit lifting actuator 150 to lift the tube cap 72 according to the rotation amount by the cap rotation actuator 148.. Accordingly, the tube cap 72 is separated from the tube body 71. Thereafter, the work table rotation actuator 138 further rotates the capping work table 132 by 180° to move the first tube 70 to the first position, and the controller 280 controls the first and second cap grippers 142a, and 142b to mount the tube cap 72 in the second position..

The robot 20 removes the first tube 70 from one of the first and second tube holders 134 and 136 using the second gripper unit 60 and moves the first tube 70 to the sample input device 110 again to mount the first tube 70 in the tube holder cup 122 on the first weight meter 120.

Then, the sample input unit lifting device 111 descends toward the sample input chamber 126, and the valve switch 118 presses the valve button 58 to open the outlet of the sample supply unit 54 connected to the sample container unit 52, and inputs a certain amount of the sample in the sample container unit 52 into the first tube 70 (S400). The amount of sample input into the first tube 70 is detected by the first weight meter 120.

The robot 20 moves the first tube 70 containing the sample to the acid injection device 170 and mounts the first tube 70 on the third tube holder 220 at the first loader position. The nozzle lifting actuator 192 lowers the injection nozzle mounting part 193 downward, the funnel movement actuator 194 positions the funnel 198 at the first funnel position, and the liquid pumping unit 182 pre-fills the injection nozzle 200 and the injection nozzle mounting part 193 with acid. In this state, the loader frame 206 moves to the second loader position, the tilting frame 216 is tilted by a set angle, the first tube 70 enters the acid injection chamber 186, the rotating plate rotation actuator 224 rotates the rotating plate 218, and the injection nozzle 200 injects a set amount of acid into the first tube 70 (S410).

Thereafter, the rotating plate 218 stops rotation, the tilting frame 216 returns to its initial position, and the loader frame 206 returns to the first loader position. The robot 20 removes the first tube 70 from the third tube holder 220 and moves to the cap opening/closing device 130 to mount the first tube 70 on one of the first and second tube holders 134 and 136 of the cap opening/closing device 130 at the first position.

The sensor 166 detects that the first tube 70 is mounted on the first tube holder 134 or the second tube holder 136 at the first position and the tube cap 72 is positioned on the first tube holder 134 or the second tube holder 136 at the second position, and the controller 280 lowers the first and second cap grippers 142a and 142b to grip the tube cap 72 and raises the first and second cap grippers 142a and 142b again.

The sensor 116 detects that the first tube 70 is mounted on the first tube holder 134 or the second tube holder 136 at the first position and the tube cap 72 is not positioned on the first tube holder 134 or the second tube holder 136 at the second position, and the controller 280 rotates the capping work table 132 by 180° to move the first tube 70 to the second position.

The sensor 166 detects that the tube 70 is not mounted on the first tube holder 134 or the second tube holder 136 at the first position, and the first tube 70 is mounted on the first tube holder 134 or the second tube holder 136 at the second position, and the first and second cap grippers 142a and 142b grip the tube cap 72, and the controller 280 controls the cap unit lifting actuator 150 to lower the tube cap 72 toward the tube body 71 and press the tube body 71 with the tube cap 72 with a constant load, controls the cap rotation actuator 148 to rotate the tube cap 72 in the second rotation direction with respect to the tube body 71, and controls the cap unit lifting actuator 150 to lower the tube cap 72 according to the rotation amount by the cap rotation actuator 148. Accordingly, the tube cap 72 is coupled to the tube body 71. Thereafter, the controller 280 further rotates the capping work table 132 by 180° to move the first tube 70 to the first position.

The robot 20 removes the first tube 70 from one of the first and second tube holders 134 and 136 using the second gripper unit 60 and shakes the first tube 70 several times to mix the sample and acid well. Thereafter, the robot 20 mounts the first tube 70 on the heat shaker 230, and the heat shaker 230 heats and shakes the first tube 70 for a set time to dissolve the sample in acid ( S420).

Thereafter, the pretreatment method further includes detecting the dissolution rate of the sample in the sample solution in which the sample is dissolved in acid. More specifically, the robot 20 removes the first tube 70 from the heat shaker 230 and moves the first tube 70 to the vision device 290 to mount between the driving roller 304 and the backup roller 306, and rotates the first tube 70 using the tube rotation actuator 300 to obtain the lower image of the first tube 70.

The controller 280 processes the lower image of the first tube 70 through a preset image processing program to test the dissolution rate of the sample (S430). A method for testing the dissolution rate of samples will be described in more detail below.

Thereafter, the pretreatment method further includes diluting the sample solution in response to the dissolution rate of the sample being greater than or equal to the set dissolution rate. More specifically, when it is determined that the dissolution rate of the sample is greater than or equal to the set dissolution rate (for example, when it is determined that the sample is completely dissolved in acid), the robot 20 moves the first tube 70 to the cap opening/closing device 130 to separate the tube cap 72 from the first tube 70 and moves the first tube 70 containing the sample solution to the acid injection device 170, and the acid injection device 170 injects the distilled water into the first tube 70 to primarily dilute the sample solution in the first tube 70 (S440).

The robot 20 mounts the first tube 70 containing the primarily diluted sample solution at the first pipette tube position, and the controller 280 rotates the pipetting work table 256 by 180° to move the first tube 70 to the second pipette tube position. In this case, the pipette unit 242 is positioned at a position corresponding to the pipette tip tray 252.

The controller 280 lowers the pipette slider 268 to mount the pipette tip 275 on the mounting end portion 273 of the pipette piston 272, and raises the pipette slider 268 back to its original position. The controller 280 moves the pipette unit 242 to the position corresponding to the pipetting work table 256 through the pipette moving unit 244, lowers the pipette slider 268 while pressing the upper end of the pipette piston 272 using the pipette push actuator 274 to immerse the pipette tip 275 into the sample solution in the first tube 70, and moves the pipette push actuator 274 upward to collect a portion of the sample solution and raises the pipette slider 268.

The robot 20 moves to the tube holder 90, removes the second tube 70 from the tube holder 90 using the second gripper unit 60, and moves the second tube 70 to the cap opening/closing device 130 to separate the tube cap 72 from the second tube 70, and mounts the empty second tube 70 in the first pipette tube position. The controller 280 rotates the pipetting work table 256 by 180° to move the first tube 70 to the first pipette tube position and the second tube 70 to the second pipette tube position.

The controller 280 lowers the pipette slider 268 to position the pipette tip 275 within the second tube 70, and moves the pipette push actuator 274 downward to inject a portion of the collected sample solution into the second tube 70 and raise the pipette slider 268. The controller 280 rotates the pipetting work table 256 by 180° to move the first tube 70 to the second pipette tube position and the second tube 70 to the first pipette tube position. Here, it is exemplified that the pipette push actuator 274 moves downward and presses the pipette piston 272 once to inject a portion of the collected sample solution into the second tube 70, but if necessary, the pipette push actuator 274 may reciprocate two or more times and press the pipette piston 272 two or more times in order to inject the collected sample solution into the second tube 70.

Thereafter, the controller 280 repeats a process of mounting the second tube 70 on the tube holder 90, removing a new second tube 70 to separate the tube cap 72, collecting the sample solution from the first tube 70, and injecting the collected sample solution into the second tube 70 to separately contain the sample solution in the first tube 70 into the plurality of second tubes 70.

Thereafter, the robot 20 moves to the tube holder 90, removes the empty third tube 70 from the tube holder 90 using the second gripper unit 60, and moves to the acid injection device 170 to inject the distilled water into the third tube 70. The robot 20 moves the third tube 70 containing the distilled water to the pipetting device 240 to collect distilled water from the third tube 70 and injects the collected distilled water into the second tube 70 to secondarily dilute the sample solution (S450). The robot 20 mounts the second tube 70 containing the secondarily diluted sample solution on the tube holder 90 to end the pretreatment method.

Here, it is exemplified that the first tube 70 containing the sample solution is primarily diluted by injecting the distilled water using the acid injection device 170, but the sample solution contained in the first tube 70 may be separately contained into second tubes 70, and the distilled water may be injected into the second tube 70 using the acid injection device 170 to be primarily diluted. In addition, although it is exemplified that the secondary dilution is performed using the pipetting device 240, the secondary dilution may also be performed using the acid injection device 170. Here, the number of times of dilutions of the sample solution is not limited to twice. When the sample solution is sufficiently diluted with one dilution, only the primary dilution may be performed. Alternatively, the dilution may be performed three or more times to sufficiently dilute the sample solution.

According to the present disclosure, the sample solution is primarily diluted using the acid injection device 170 and the sample solution is secondarily diluted using the pipetting device 240. Since the pipette push actuator 274 may finely control the amount of pressure on the pipette piston 272, the secondary dilution of the sample solution may be precisely controlled. Therefore, the measurement errors may be reduced when testing the metal components.

Meanwhile, the pretreatment method may further include adjusting the set pretreatment conditions in response to the dissolution rate of the sample being less than the set dissolution rate. For example, if the dissolution rate is lower than the set dissolution rate, the controller 280 may adjust the component or amount of acid in which the sample is dissolved, or the heat shaker 230 may adjust the time and/or temperature for heating the tube 70 containing the dissolved acid.

Thereafter, the controller 280 may return to the step of injecting the sample into the tube or dissolving the sample by injecting acid into the tube containing the sample according to the adjusted pretreatment conditions.

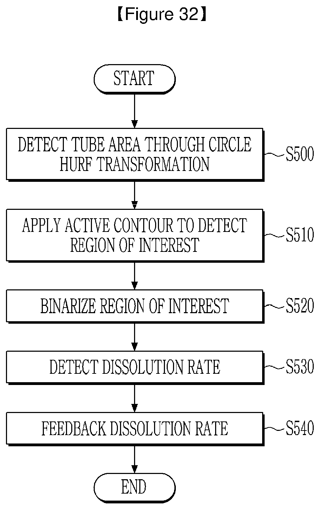

Hereinafter, a method for testing a dissolution rate of a sample according to an exemplary embodiment of the present disclosure will be described in detail with reference to FIGS. 32 to 36.

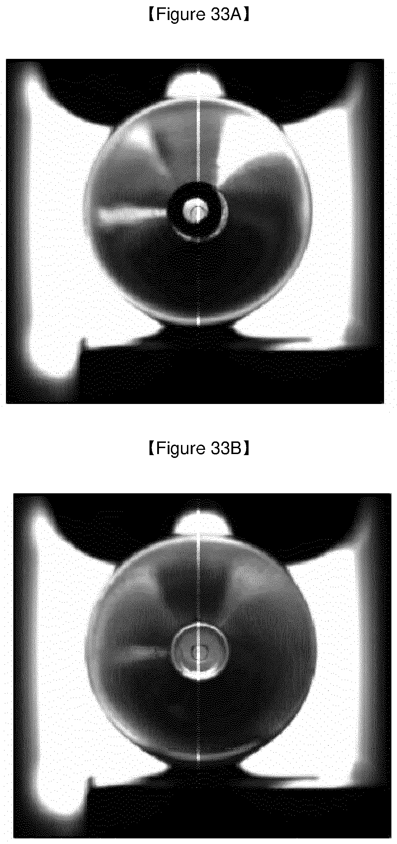

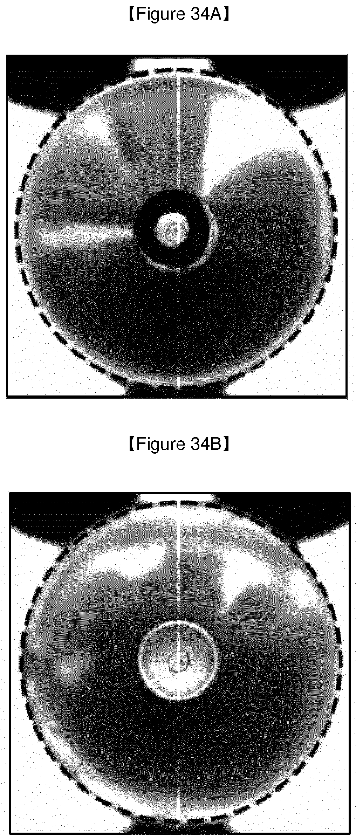

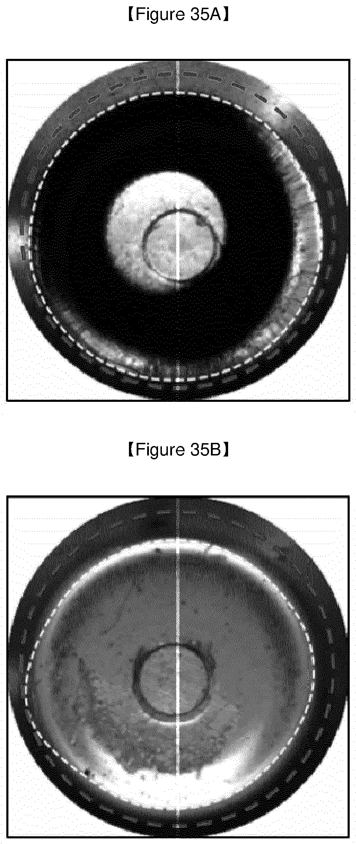

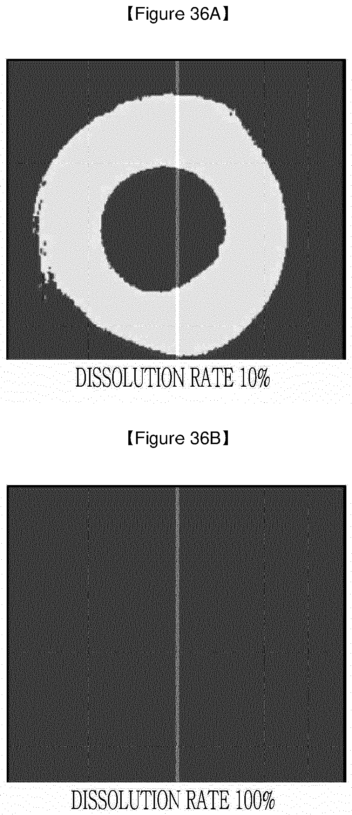

FIG. 32 is a flowchart of a method for testing a dissolution rate of a sample according to an exemplary embodiment of the present disclosure; FIG. 33 are original images of tubes containing samples dissolved in acid; FIG. 34 is a circle Hough transformed image of an original image of FIG. 33; FIG. 35 is images obtained by applying an active contour model to images of FIG. 34; FIG. 36 illustrates a binarized image of a region of interest in an image of FIG. 35. For convenience of explanation, FIGS. 32 to 36 illustrate a method for acquiring a lower image of a tube 70 using the image acquisition device 292 and testing a dissolution rate of a sample using the lower image of the tube 70.. However, the image of the set portion of the tube 70 required to test the dissolution rate of the sample is not limited to the lower image of the tube 70.

As illustrated in FIG. 32, the method for testing a dissolution rate of a sample according to an exemplary embodiment of the present disclosure starts by mounting the tube 70 containing the acid in which the sample is dissolved between the driving roller 304 and the backup roller 306, rotating the tube 70 using the tube rotation actuator 300, and acquiring the image of the set portion of the tube 70 using the image acquisition device 292. Here, acquiring the lower image of the tube 70 using the image acquisition device 292 is illustrated. FIG. 33(a) illustrates the lower image of the tube 70 containing acid in which sample 1 is dissolved. FIG. 33(b) illustrates the lower image of the tube 70 containing acid in which sample 2 is dissolved.

The image of the set portion of the tube 70 acquired by the image acquisition device 292 is transmitted to the controller 280, and the controller 280 processes the image of the set portion of the tube 70 through a preset image processing program.

More specifically, the controller 280 detects the shape corresponding to the outer surface of the tube 70 as the tube area in the image of the set portion of the tube 70 by the image feature-based computer vision algorithms such as circle Hough transformation or Laplacian of Gaussian (LoG) (S500). Here, the image feature-based computer vision algorithm refers to a vision algorithm that detects the set area based on the shape characteristics of the image. In one example, since the lower image of the tube 70 has the shape of the circle, the controller 280 detects the circle corresponding to the outer surface of the tube 70 through the circle Hough transformation in the lower image of the tube 70 as the tube area (S500). The controller 280 cuts the tube area using the center point coordinates and the radius of the circle. In other words, the background outside the tube area is removed. FIG. 34(a) is an image obtained by detecting the tube area by the circle Hough transformation on FIG. 33(a). FIG. 34(b) is an image obtained by detecting the tube area by the circle Hough transformation on FIG. 33(b). The circle indicated by the dotted line in FIGS. 34(a) and 34(b) corresponds to the tube area.

The controller 280 detects the area of interest by applying a shape recognition algorithm such as the active contour model to the tube area (S510). More specifically, an approximate area according to an object of interest is set in the tube area, the area is gradually narrowed, and the area of interest is detected by finding singular points whose brightness, shape, etc. are different from the surrounding area. FIG. 35(a) is an image obtained by applying the active contour model to FIG. 34(a). FIG. 35(b) is an image obtained by applying the active contour model to FIG. 34(b). In FIGS. 35(a) and 35(b), the outer circle indicated by a dotted line indicates an approximate area according to the object of interest, and the inner circle indicated by a dotted line indicates the area of interest detected from singular points.

The controller 280 classifies pixels in the detected region of interest into two or more types of pixels according to the set reference, and assigns the pixel values to the classified pixels (S520). For example, the controller 280 may use rule-based computer vision algorithms, machine learning, deep learning, etc., to binarize the pixels within the detected region of interest according to the set reference (S520). More specifically, the controller 280 may calculate the average value of the brightness of all pixels in the detected region of interest, assign a pixel value of 0 to pixels that are darker than the average brightness value by a set amount, and assign a pixel value of 1 to the remaining pixels. FIG. 36(a) is an image in which FIG. 35(a) is binarized, a pixel value of 0 are displayed in white, and a pixel value of 1 is displayed in black. FIG. 36(b) is an image in which FIG. 35(b) is binarized, a pixel value of 0 are displayed in white, and a pixel value of 1 is displayed in black. However, the present disclosure is not limited to classifying and binarizing the pixels in the detected region of interest into two types of pixels, and if necessary, classifying the binarized pixels into three or more types of pixels, and differently setting the pixel values assigned to different types of pixels.

The controller 280 detects the dissolution rate of the sample using the pixel value assigned to each pixel (S530). For example, the controller 280 may detect the dissolution rate of the sample using the pixel values of the binarized pixels (S530). More specifically, the ratio between the number of pixels with a pixel value of 1 and the total number of pixels may be defined as the dissolution rate. Accordingly, the dissolution rate of sample 1 is 10% and the dissolution rate of sample 2 is 100%.

When the dissolution rate is lower than the set dissolution rate, the controller 280 feeds back the dissolution rate and modifies the pretreatment method that affects the dissolution rate (S540). For example, the set dissolution rate may be 50%, 60%, 70%, 80%, 90%, or 100%. If the dissolution rate is lower than the set dissolution rate, the controller 280 may adjust the component or amount of acid in which the sample is dissolved, or the heat shaker 230 may adjust the time and/or temperature for heating the tube 70 containing the dissolved acid.

## Claims

1. A pretreatment system (10) for testing a metal component in a sample, comprising:
a robot (20) including a plurality of arms (22a-g) capable of relative rotation with respect to each other and a foremost arm of the plurality of arms being movable within an operating radius;
a gripper device (30) mounted at the foremost arm (22g) of the robot and including a first gripper unit (40) for gripping or releasing a dosing head (50) on one side and a second gripper unit (60) for gripping or releasing a tube (70) on the other side;
a sample input device (110) including a sample input unit lifting device (111) that includes a dosing head (50) mounted thereon and is movable up and down and a tube holder cup (122) that is disposed below the sample input unit lifting device and includes a tube mounted thereon, and configured to input the sample in the dosing head into the tube mounted on the tube holder cup;
an acid injection device (170) configured to inject acid into the tube into which the sample is input from a sample injection device or to inject distilled water into the tube containing the acid in which the sample is dissolved;
a heat shaker (230) configured to apply heat to the tube containing the acid mixed with the sample and shake the tube to dissolve the sample in the acid;
a vision device (290) acquiring an image of a set portion of a tube containing a sample solution in which the sample is dissolved in the acid; and
a pipetting device (240) configured to transfer a portion of the solution in one tube to another tube.

2. The pretreatment system of claim 1, further comprising:
a dosing head holder (80) on which a plurality of dosing heads are mounted:
a tube holder (90) on which a plurality of tubes, in which a tube cap (72) is coupled to a tube body (71), are mounted; and
a cap opening/closing device (130) configured to separate the tube cap from the tube body or couple the tube cap to the tube body,
wherein the dosing head holder, the tube holder, the sample input device, the cap opening/closing device, the acid injection device, the heat shaker, the vision device, and the pipetting device are at least partially disposed within the operating radius of the robot.

3. The pretreatment system of claim 1, wherein:
the acid injection device is configured to inject liquid into the tube mounted on the acid injection device while tilting and rotating the tube.

4. The pretreatment system of claim 1, wherein:
the heat shaker includes:
a shaker unit (238) configured to shake a shaker rod (237);
a heating block (233) positioned on the shaker rod and heating the mounted tube; and
an insulating cover (231) spaced apart from a heating block on the heating block and surrounding the heating block, and
the tube is inserted into and mounted on the insulating cover and the heating block.

5. The pretreatment system of claim 2, further comprising:
a controller (280) controlling an operation of the robot, the gripper device, the dosing head holder, the tube holder, the sample input device, the cap opening/closing device, the acid injection device, the heat shaker, the vision device, and the pipetting device,
the controller is configured to receive an image of a set portion of the tube containing the sample solution from the vision device, process the image of the set portion with a preset image processing program, and detect a dissolution rate of the sample.

6. The pretreatment system of claim 1, wherein:
the gripper device further includes a gripper body (32) rotatably mounted on the foremost arm of the robot, and
the first gripper unit is mounted on one side of the gripper body, and the second gripper unit is mounted on the other side of the gripper body, the first gripper unit includes:
first and second gripping fingers (42a, 42b) movable toward each other or away from each other;
a guide bushing (74) having a cylindrical shape including an open one surface and a closed other surface and fixed within tip portions of each of the first and second gripping fingers;
a first pusher (46a) or a second pusher (46b) disposed on the open one surface of the guide bushing and being slidable along a inner peripheral surface of the guide bushing;
a guide shaft (76) extending to one side through a guide shaft hole formed on the closed other surface of the guide bushing and connected to the first pusher or the second pusher; and
a guide spring (78) elastically supporting the first pusher or the second pusher with respect to the guide bushing.

7. The pretreatment system of claim 2, wherein:
the cap opening/closing device includes:
a capping work table (132) having a first tube holder (134) provided on one side thereof and a second tube holder (136) provided on the other side thereof and being rotatable to position one of the first tube holder and the second tube holder at one of a first position where the tube is mounted or gripped and a second position where the tube cap is coupled to the tube body or the tube cap is separated from the tube body and position the other of the first tube holder and the second tube holder in the other of the first position and the second position; and
a support lifting block (146) moving up and down by a cap unit lifting actuator (150);
a cap gripper support (144) rotatably mounted on the support lifting block;
first and second cap grippers (142a, 142b) mounted on the cap gripper support, positioned to correspond to the tube cap of the tube in the second position, and configured to move toward each other to grip the tube cap or move away from each other to dispose the tube cap;
first and second tube body grippers (154a, 154b) configured to be positioned to correspond to the tube body of the tube in the second position, move toward each other to grip the tube body, or move away from each other to dispose the tube cap; and
a cap rotation actuator (148) mounted on the support lifting block, including a lower end penetrating through the support lifting block and connected to the cap gripper support, and configured to rotate the cap gripper support in a first rotation direction to separate the tube cap from the tube body, and rotate the cap gripper support in a second rotation direction, which is an opposite direction to the first rotation direction, to couple the tube cap to the tube body.

8. The pretreatment system of claim 1, wherein:
the acid injection device includes:
an acid supply unit (172) including a liquid pumping unit (182) configured to pump liquid contained in a plurality of liquid bottles (178);
an acid injection unit (176) including an acid injection chamber body having an acid injection chamber (186) formed therein, an injection nozzle (200) mounted on the injection nozzle mounting part (193) within the acid injection chamber and configured to communicate with the liquid pumping unit to inject the liquid pumped from the liquid pumping unit into the tube, and a nozzle lifting actuator (192) mounted on the acid injection chamber body and connected to the injection nozzle mounting part to move the injection nozzle mounting part up and down; and
a tube loader unit (174) configured to mount the tube thereon, tilt the mounted tube to insert the tube into the acid injection chamber, and rotate the tilted mounted tube, and
when the tube is tilted and rotates and positioned in the acid injection chamber, the nozzle lifting actuator lowers the injection nozzle mounting part and positions the injection nozzle mounting part on the tube, and the injection nozzle injects the liquid pumped from the liquid pumping unit into the tilted rotating tube.

9. The pretreatment system of claim 1, wherein:
the pipetting device includes:
a pipette tip tray (252) on which a plurality of pipette tips are mounted:
a pipetting work table (256) having a first pipette tube holder (258) provided on one side thereof and a second pipette tube holder (260) provided on the other side and being rotatable to position one of the first and second pipette tube holders in one of a first pipette tube position where the tube is mounted or gripped and a second pipette tube position where a solution is collected from the tube or the solution is injected into the tube and position the other of the first and second pipette tube holders in the other of the first and second pipette tube positions;
a pipette unit (242) configured to mount a pipette tip at a position corresponding to a pipette tip tray and collect a portion of the solution contained in a first tube at a position equivalent to the pipetting work table or inject the collected solution into a second tube; and
a pipette moving unit (244) moving the pipette unit between a position corresponding to the pipette tip tray and a position corresponding to the pipetting work table.

10. The pretreatment system of claim 1, wherein:
a metal component test is performed after dissolving the sample in the tube in the acid to detect the metal component contained in the sample, and
the vision device includes:
a driving roller (304) and a backup roller (306) configured to mount the tube containing the acid in which the sample is dissolved and rotate the tube;
an image acquisition device (292) configured to be mounted between the drive roller and the backup roller to acquire a lower image of the rotating tube;
a lighting module (298) configured to irradiate light to the tube from an opposite side to the image acquisition device with respect to the tube; and
a controller (280) configured to test a dissolution rate of the sample by processing the lower image of the tube acquired by the image acquisition device, and
the controller is configured to
detect a tube area in the image of the set portion of the tube through an image feature-based vision algorithm,
apply a shape recognition algorithm to the tube area to detect a region of interest,
classify pixels within the detected region of interest according to a set reference and assign pixel values to the classified pixels, and
detect the dissolution rate of the sample using the pixel values of each pixel.

11. A pretreatment method for testing a metal component in a sample, comprising:
inputting, by a sample injection device (110), the sample in a dosing head into a first tube;
injecting, by an acid injection device (170), the acid into the first tube into which the sample is input;
shaking, by a heat shaker (230), the first tube containing the acid in which the sample is dissolved and applying heat;
acquiring, by a vision device (290), an image of a set portion of the first tube;
testing, by a controller (280), a dissolution rate of the sample by processing an image of the set portion of the first tube; and
diluting the sample solution in response to the dissolution rate of the sample being greater than or equal to a set dissolution rate.

12. The pretreatment method of claim 11, further comprising:
removing the dosing head from a dosing head holder by a robot having a gripper device mounted at a foremost end thereof and mounting the removed dosing head on a sample input unit lifting device;
removing the first tube from a tube holder by the robot equipped with the gripper device;
separating, by a cap opening/closing device, a tube cap from the first tube; and
mounting, by the robot equipped with the gripper device, the first tube, from which the tube cap is separated, on a tube holder cup .

13. The pretreatment method of claim 11, wherein:
the acid injection device is configured to inject liquid into the tube mounted on the acid injection device while tilting and rotating the tube.

14. The pretreatment method of claim 11, wherein:
the diluting of the sample solution includes:
injecting, by the acid injection device, distilled water into the first tube to primarily dilute the sample solution;
transferring, by a pipetting device, a portion of the primarily diluted sample solution in the first tube to a second tube; and
injecting, by the acid injection device, distilled water into the second tube to secondarily dilute the sample solution.

15. The pretreatment method of claim 11, wherein:
the testing of the dissolution rate of the sample by processing the image of the set potion of the first tube includes:
detecting a tube area in the image of the set portion of the first tube through an image feature-based vision algorithm;
applying a shape recognition algorithm to the tube area to detect a region of interest, and
classifying pixels within the detected region of interest according to a set reference and assigning pixel values to the classified pixels; and
detecting the dissolution rate of the sample using the pixel values of each pixel.

## Patentansprüche

1. Vorbehandlungssystem (10) zum Testen einer Metallkomponente in einer Probe, umfassend:
einen Roboter (20), welcher eine Mehrzahl von Armen (22a-g) umfasst, welche zu einer relativen Drehung in Bezug aufeinander in der Lage sind, wobei ein vorderster Arm der Mehrzahl von Armen innerhalb eines Arbeitsradius beweglich ist;
eine Greifervorrichtung (30), welche an dem vordersten Arm (22g) des Roboters installiert ist und eine erste Greifereinheit (40) zum Greifen oder Freigeben eines Dosierkopfs (50) an einer Seite und eine zweite Greifereinheit (60) zum Greifen oder Freigeben eines Röhrchens (70) an der anderen Seite umfasst;
eine Probeneingabevorrichtung (110), welche eine Probeneingabeeinheit-Hebevorrichtung (111), die einen daran installierten Dosierkopf (50) umfasst und auf und ab beweglich ist, und einen Röhrchenhalterbecher (122) umfasst, welcher unterhalb der Probeneingabeeinheit-Hebevorrichtung angeordnet ist und ein daran installiertes Röhrchen umfasst, und welche dazu eingerichtet ist, die Probe in dem Dosierkopf in das an dem Röhrchenhalterbecher installierte Röhrchen einzugeben;
eine Säureinjektionsvorrichtung (170), welche dazu eingerichtet ist, Säure in das Röhrchen zu injizieren, in welches die Probe von einer Probeninjektionsvorrichtung eingegeben wird, oder destilliertes Wasser in das Röhrchen zu injizieren, welches die Säure enthält, in welcher die Probe aufgelöst ist;
einen Wärmeschüttler (230), welcher dazu eingerichtet ist, Wärme auf das Röhrchen anzuwenden, welches die Säure enthält, welche mit der Probe vermischt ist, und das Röhrchen zu schütteln, um die Probe in der Säure aufzulösen;
eine Visualisierungsvorrichtung (290), welche ein Bild eines festgelegten Abschnitts eines Röhrchens aufnimmt, welches eine Probenlösung enthält, in welcher die Probe in der Säure aufgelöst ist; und
eine Pipettiervorrichtung (240), welche dazu eingerichtet ist, einen Teil der Lösung in einem Röhrchen in ein anderes Röhrchen zu überführen.

2. Vorbehandlungssystem nach Anspruch 1, ferner umfassend:
einen Dosierkopfhalter (80), an welchem eine Mehrzahl von Dosierköpfen installiert ist;
einen Röhrchenhalter (90), an welchem eine Mehrzahl von Röhrchen installiert ist, in welchen eine Röhrchenkappe (72) mit einem Röhrchenkörper (71) gekoppelt ist; und
eine Kappen-Öffnungs-/Schließvorrichtung (130), welche dazu eingerichtet ist, die Röhrchenkappe von dem Röhrchenkörper zu trennen oder die Röhrchenkappe mit dem Röhrchenkörper zu koppeln,
wobei der Dosierkopfhalter, der Röhrchenhalter, die Probeneingabevorrichtung, die Kappen-Öffnungs-/Schließvorrichtung, die Säureinjektionsvorrichtung, der Wärmeschüttler, die Visualisierungsvorrichtung und die Pipettiervorrichtung wenigstens teilweise innerhalb des Arbeitsradius des Roboters angeordnet sind.

3. Vorbehandlungssystem nach Anspruch 1, wobei:
die Säureinjektionsvorrichtung dazu eingerichtet ist, Flüssigkeit in das Röhrchen zu injizieren, welches an der Säureinjektionsvorrichtung installiert ist, während sie das Röhrchen neigt und dreht.

4. Vorbehandlungssystem nach Anspruch 1, wobei:
der Wärmeschüttler umfasst:
eine Schüttlereinheit (238), welche dazu eingerichtet ist, einen Schüttlerstab (237) zu schütteln;
einen Heizblock (233), welcher an dem Schüttlerstab positioniert ist und das installierte Röhrchen erwärmt; und
eine Isolierabdeckung (231), welche von einem Heizblock an dem Heizblock beabstandet ist und den Heizblock umgibt, und
das Röhrchen in die Isolierabdeckung und den Heizblock eingeführt und daran installiert ist.

5. Vorbehandlungssystem nach Anspruch 2, ferner umfassend:
eine Steuereinrichtung (280), welche einen Betrieb des Roboters, der Greifervorrichtung, des Dosierkopfhalters, des Röhrchenhalters, der Probeneingabevorrichtung, der Kappen-Öffnungs-/Schließvorrichtung, der Säureinjektionsvorrichtung, des Wärmeschüttlers, der Visualisierungsvorrichtung und der Pipettiervorrichtung steuert,
wobei die Steuereinrichtung dazu eingerichtet ist, ein Bild eines festgelegten Abschnitts des Röhrchens, welches die Probenlösung enthält, von der Visualisierungsvorrichtung zu empfangen, das Bild des festgelegten Abschnitts mit einem voreingestellten Bildverarbeitungsprogramm zu verarbeiten und eine Auflösungsrate der Probe zu detektieren.

6. Vorbehandlungssystem nach Anspruch 1, wobei:
die Greifervorrichtung ferner einen Greiferkörper (32) umfasst, welcher drehbar an dem vordersten Arm des Roboters installiert ist, und
die erste Greifereinheit an einer Seite des Greiferkörpers installiert ist und die zweite Greifereinheit an der anderen Seite des Greiferkörpers installiert ist,
die erste Greifereinheit umfasst:
einen ersten und einen zweiten Greiffinger (42a, 42b), welche aufeinander zu oder voneinander weg beweglich sind;
eine Führungsbuchse (74), welche eine zylindrische Form aufweist, die eine offene eine Fläche und eine geschlossene andere Fläche umfasst und innerhalb von Spitzenabschnitten jedes des ersten und des zweiten Greiffingers befestigt ist;
einen ersten Schieber (46a) oder einen zweiten Schieber (46b), welcher an der offenen einen Fläche der Führungsbuchse angeordnet ist und entlang einer Innenumfangsfläche der Führungsbuchse verschiebbar ist;
eine Führungswelle (76), welche sich durch ein Führungswellenloch, welches an der geschlossenen anderen Fläche der Führungsbuchse gebildet ist, zu einer Seite erstreckt, und mit dem ersten Schieber oder dem zweiten Schieber verbunden ist; und
eine Führungsfeder (78), welche den ersten Schieber oder den zweiten Schieber in Bezug auf die Führungsbuchse elastisch haltert.

7. Vorbehandlungssystem nach Anspruch 2, wobei:
die Kappen-Öffnungs-/Schließvorrichtung umfasst:
einen Verschlussarbeitstisch (132), welcher einen ersten Röhrchenhalter (134), der an einer Seite davon bereitgestellt ist, und einen zweiten Röhrchenhalter (136) aufweist, der an der anderen Seite davon bereitgestellt ist, und welcher drehbar ist, um einen aus dem ersten Röhrchenhalter und dem zweiten Röhrchenhalter in einer aus einer ersten Position, in welcher das Röhrchen installiert oder gegriffen wird, und einer zweiten Position zu positionieren, in welcher die Röhrchenkappe mit dem Röhrchenkörper gekoppelt wird oder die Röhrchenkappe von dem Röhrchenkörper getrennt wird, und den anderen aus dem ersten Röhrchenhalter und dem zweiten Röhrchenhalter in der anderen aus der ersten Position und der zweiten Position zu positionieren; und
einen Halterungshebeblock (146), welcher sich durch einen Kappeneinheit-Hebeaktuator (150) auf und ab bewegt;
eine Kappengreiferhalterung (144), welche drehbar an dem Halterungshebeblock installiert ist;
einen ersten und einen zweiten Kappengreifer (142a, 142b), welche an der Kappengreiferhalterung installiert sind, derart positioniert sind, dass sie der Röhrchenkappe des Röhrchens in der zweiten Position entsprechen, und dazu eingerichtet sind, sich in Richtung zueinander zu bewegen, um die Röhrchenkappe zu greifen, oder sich voneinander weg zu bewegen, um die Röhrchenkappe abzusetzen;
einen ersten und einen zweiten Röhrchenkörpergreifer (154a, 154b), welche dazu eingerichtet sind, derart positioniert zu sein, dass sie dem Röhrchenkörper des Röhrchens in der zweiten Position entsprechen, sich in Richtung zueinander zu bewegen, um den Röhrchenkörper zu greifen, oder sich voneinander weg zu bewegen, um die Röhrchenkappe abzusetzen; und
einen an dem Halterungshebeblock installierten Kappenrotationsaktuator (148), welcher ein unteres Ende umfasst, welches durch den Halterungshebeblock hindurchragt und mit der Kappengreiferhalterung verbunden ist, und welcher dazu eingerichtet ist, die Kappengreiferhalterung in einer ersten Drehrichtung zu drehen, um die Röhrchenkappe von dem Röhrchenkörper zu trennen, und die Kappengreiferhalterung in einer zweiten Drehrichtung zu drehen, welche eine zu der ersten Drehrichtung entgegengesetzte Richtung ist, um die Röhrchenkappe mit dem Röhrchenkörper zu koppeln.

8. Vorbehandlungssystem nach Anspruch 1, wobei
die Säureinjektionsvorrichtung umfasst:
eine Säurezufuhreinheit (172), welche eine Flüssigkeitspumpeinheit (182) umfasst, die dazu eingerichtet ist, Flüssigkeit zu pumpen, welche in einer Mehrzahl von Flüssigkeitsflaschen (178) enthalten ist;
eine Säureinjektionseinheit (176), welche einen Säureinjektionskammerkörper, welcher eine darin gebildete Säureinjektionskammer (186) aufweist, eine Injektionsdüse (200), welche innerhalb der Säureinjektionskammer an dem Injektionsdüseninstallationsteil (193) installiert ist und dazu eingerichtet ist, mit der Flüssigkeitspumpeinheit in Verbindung zu stehen, um die von der Flüssigkeitspumpeinheit gepumpte Flüssigkeit in das Röhrchen zu injizieren, und einen Düsenhebeaktuator (192) umfasst, welcher an dem Säureinjektionskammerkörper installiert ist und mit dem Injektionsdüseninstallationsteil verbunden ist, um den Injektionsdüseninstallationsteil auf und ab zu bewegen; und
eine Röhrchenladereinheit (174), welche dazu eingerichtet ist, das Röhrchen daran zu installieren, das installierte Röhrchen zu neigen, um das Röhrchen in die Säureinjektionskammer einzuführen, und das geneigte installierte Röhrchen zu drehen, und
wenn das Röhrchen geneigt ist und sich dreht und in der Säureinjektionskammer positioniert ist, der Düsenhebeaktuator den Injektionsdüseninstallationsteil absenkt und den Injektionsdüseninstallationsteil an dem Röhrchen positioniert, und die Injektionsdüse die von der Flüssigkeitspumpeinheit gepumpte Flüssigkeit in das geneigte, sich drehende Röhrchen injiziert.

9. Vorbehandlungssystem nach Anspruch 1, wobei:
die Pipettiervorrichtung umfasst:
eine Pipettenspitzenablage (252), an welcher eine Mehrzahl von Pipettenspitzen installiert ist;
einen Pipettierarbeitstisch (256), welcher einen ersten Pipettenröhrchenhalter (258), der an einer Seite davon bereitgestellt ist, und einen zweiten Pipettenröhrchenhalter (260) aufweist, der an der anderen Seite davon bereitgestellt ist, und welcher drehbar ist, um einen aus dem ersten und dem zweiten Pipettenröhrchenhalter in einer aus einer ersten Pipettenröhrchenposition, in welcher das Röhrchen installiert oder gegriffen wird, und einer zweiten Pipettenröhrchenposition zu positionieren, in welcher eine Lösung aus dem Röhrchen gesammelt wird oder die Lösung in das Röhrchen injiziert wird, und den anderen aus dem ersten und dem zweiten Pipettenröhrchenhalter in der anderen der ersten und der zweiten Pipettenröhrchenposition zu positionieren;
eine Pipetteneinheit (242), welche dazu eingerichtet ist, eine Pipettenspitze in einer Position zu installieren, welche einer Pipettenspitzenablage entspricht, und einen Teil der in einem ersten Röhrchen enthaltenen Lösung in einer Position zu sammeln, welche äquivalent zu dem Pipettierarbeitstisch ist, oder die gesammelte Lösung in ein zweites Röhrchen zu injizieren; und
eine Pipettenbewegungseinheit (244), welche die Pipetteneinheit zwischen einer Position, welche der Pipettenspitzenablage entspricht, und einer Position bewegt, welche dem Pipettierarbeitstisch entspricht.

10. Vorbehandlungssystem nach Anspruch 1, wobei:
nach dem Auflösen der Probe in dem Röhrchen in der Säure ein Metallkomponententest durchgeführt wird, um die Metallkomponente zu detektieren, welche in der Probe enthalten ist, und
die Visualisierungsvorrichtung umfasst:
eine Antriebsrolle (304) und eine Stützrolle (306), welche dazu eingerichtet sind, das Röhrchen, welches die Säure enthält, in welcher die Probe aufgelöst ist, zu installieren und das Röhrchen zu drehen;
eine Bildaufnahmevorrichtung (292), welche dazu eingerichtet ist, zwischen der Antriebsrolle und der Stützrolle installiert zu sein, um ein unteres Bild des gedrehten Röhrchens aufzunehmen;
ein Beleuchtungsmodul (298), welches dazu eingerichtet ist, von einer der Bildaufnahmevorrichtung in Bezug auf das Röhrchen entgegengesetzten Seite Licht auf das Röhrchen auszustrahlen; und
eine Steuereinrichtung (280), welche dazu eingerichtet ist, durch ein Verarbeiten des durch die Bildaufnahmevorrichtung aufgenommenen unteren Bilds des Röhrchens eine Auflösungsrate der Probe zu testen, und
die Steuereinrichtung eingerichtet ist zum
Detektieren eines Röhrchenbereichs in dem Bild des festgelegten Abschnitts des Röhrchens durch einen bildmerkmalsbasierten Visualisierungsalgorithmus,
Anwenden eines Formerkennungsalgorithmus auf den Röhrchenbereich, um einen Bereich von Interesse zu detektieren,
Klassifizieren von Pixeln innerhalb des detektierten Bereichs von Interesse gemäß einer festgelegten Referenz und Zuweisen von Pixelwerten zu den klassifizierten Pixeln und
Detektieren der Auflösungsrate der Probe unter Verwendung der Pixelwerte jedes Pixels.

11. Vorbehandlungsverfahren zum Testen einer Metallkomponente in einer Probe, umfassend:
Eingeben, durch eine Probeninjektionsvorrichtung (110), der Probe in einem Dosierkopf in ein erstes Röhrchen;
Injizieren, durch eine Säureinjektionsvorrichtung (170), der Säure in das erste Röhrchen, in welches die Probe eingegeben wird;
Schütteln, durch einen Wärmeschüttler (230), des ersten Röhrchens, welches die Säure enthält, in welcher die Probe aufgelöst ist, und Anwenden von Wärme;
Aufnehmen, durch eine Visualisierungsvorrichtung (290), eines Bilds eines festgelegten Abschnitts des ersten Röhrchens;
Testen, durch eine Steuereinrichtung (280), einer Auflösungsrate der Probe durch ein Verarbeiten eines Bilds des festgelegten Abschnitts des ersten Röhrchens; und
Verdünnen der Probenlösung als Reaktion darauf, dass die Auflösungsrate der Probe größer als oder gleich wie eine festgelegte Auflösungsrate ist.

12. Vorbehandlungsverfahren nach Anspruch 11, ferner umfassend:
Entfernen des Dosierkopfs aus einem Dosierkopfhalter durch einen Roboter, welcher eine Greifervorrichtung aufweist, welche an einem vordersten Ende davon installiert ist, und Installieren des entfernten Dosierkopfs an einer Probeneingabeeinheit-Hebevorrichtung;
Entfernen des ersten Röhrchens aus einem Röhrchenhalter durch den mit der Greifervorrichtung ausgestatteten Roboter;
Trennen, durch eine Kappen-Öffnungs-/Schließvorrichtung, einer Röhrchenkappe von dem ersten Röhrchen; und
Installieren, durch den mit der Greifervorrichtung ausgestatteten Roboter, des ersten Röhrchens, von welchem die Röhrchenkappe getrennt ist, an einem Röhrchenhalterbecher.

13. Vorbehandlungsverfahren nach Anspruch 11, wobei:
die Säureinjektionsvorrichtung dazu eingerichtet ist, Flüssigkeit in das Röhrchen zu injizieren, welches an der Säureinjektionsvorrichtung installiert ist, während sie das Röhrchen neigt und dreht.

14. Vorbehandlungsverfahren nach Anspruch 11, wobei:
das Verdünnen der Probenlösung umfasst:
Injizieren, durch die Säureinjektionsvorrichtung, von destilliertem Wasser in das erste Röhrchen, um die Probenlösung primär zu verdünnen;
Überführen, durch eine Pipettiervorrichtung, eines Teils der primär verdünnten Probenlösung in dem ersten Röhrchen in ein zweites Röhrchen; und
Injizieren, durch die Säureinjektionsvorrichtung, von destilliertem Wasser in das zweite Röhrchen, um die Probenlösung sekundär zu verdünnen.

15. Vorbehandlungsverfahren nach Anspruch 11, wobei:
das Testen der Auflösungsrate der Probe durch das Verarbeiten des Bilds des festgelegten Abschnitts des ersten Röhrchens umfasst:
Detektieren eines Röhrchenbereichs in dem Bild des festgelegten Abschnitts des ersten Röhrchens durch einen bildmerkmalsbasierten Visualisierungsalgorithmus;
Anwenden eines Formerkennungsalgorithmus auf den Röhrchenbereich, um einen Bereich von Interesse zu detektieren, und
Klassifizieren von Pixeln innerhalb des detektierten Bereichs von Interesse gemäß einer festgelegten Referenz und Zuweisen von Pixelwerten zu den klassifizierten Pixeln; und
Detektieren der Auflösungsrate der Probe unter Verwendung der Pixelwerte jedes Pixels.

## Revendications

1. Système de pré-traitement (10) pour tester un composant métallique dans un échantillon, comprenant :
un robot (20) comportant une pluralité de bras (22a-g) capables d'une rotation relative les uns par rapport aux autres et un bras principal de la pluralité de bras étant mobile dans un rayon de fonctionnement ;
un dispositif préhenseur (30) monté au niveau du bras principal (22g) du robot et comportant une première unité de préhenseur (40) pour saisir ou libérer une tête de dosage (50) sur un côté et une seconde unité de préhenseur (60) pour saisir ou libérer un tube (70) sur l'autre côté ;
un dispositif d'introduction d'échantillon (110) comportant un dispositif de levage d'unité d'introduction d'échantillon (111) qui comporte une tête de dosage (50) montée sur celui-ci et qui est mobile vers le haut et vers le bas et une coupelle porte-tube (122) qui est disposée sous le dispositif de levage d'unité d'introduction d'échantillon et comporte un tube monté sur celle-ci, et configuré pour introduire l'échantillon dans la tête de dosage dans le tube monté sur la coupelle porte-tube ;
un dispositif d'injection d'acide (170) configuré pour injecter de l'acide dans le tube dans lequel l'échantillon est introduit à partir d'un dispositif d'injection d'échantillon ou pour injecter de l'eau distillée dans le tube contenant l'acide dans lequel l'échantillon est dissous ;
un agitateur thermique (230) configuré pour appliquer de la chaleur au tube contenant l'acide mélangé à l'échantillon et agiter le tube pour dissoudre l'échantillon dans l'acide ;
un dispositif de vision (290) acquérant une image d'une portion définie d'un tube contenant une solution d'échantillon dans laquelle l'échantillon est dissous dans l'acide ; et
un dispositif de pipetage (240) configuré pour transférer une portion de la solution d'un tube vers un autre tube.

2. Système de pré-traitement selon la revendication 1, comprenant en outre :
un porte-têtes de dosage (80) sur lequel sont montées une pluralité de têtes de dosage ;
un porte-tubes (90) sur lequel sont montés une pluralité de tubes, dans lesquels un bouchon de tube (72) est couplé à un corps de tube (71) ; et
un dispositif d'ouverture/fermeture de bouchon (130) configuré pour séparer le bouchon de tube du corps de tube ou coupler le bouchon de tube au corps de tube,
dans lequel le porte-têtes de dosage, le porte-tubes, le dispositif d'entrée d'échantillon, le dispositif d'ouverture/fermeture de bouchon, le dispositif d'injection d'acide, l'agitateur thermique, le dispositif de vision et le dispositif de pipetage sont disposés au moins partiellement à l'intérieur du rayon de fonctionnement du robot.

3. Système de pré-traitement selon la revendication 1, dans lequel :
le dispositif d'injection d'acide est configuré pour injecter du liquide dans le tube monté sur le dispositif d'injection d'acide tout en inclinant et en faisant tourner le tube.

4. Système de pré-traitement selon la revendication 1, dans lequel :
l'agitateur thermique comporte :
une unité agitatrice (238) configurée pour agiter une tige agitatrice (237) ;
un bloc chauffant (233) positionné sur la tige agitatrice et chauffant le tube monté ; et
un couvercle isolant (231) espacé d'un bloc chauffant sur le bloc chauffant et entourant le bloc chauffant, et
le tube est inséré dans le couvercle isolant et le bloc chauffant, et monté sur ceux-ci.

5. Système de pré-traitement selon la revendication 2, comprenant en outre :
un dispositif de commande (280) commandant un fonctionnement du robot, du dispositif préhenseur, du porte-têtes de dosage, du porte-tubes, du dispositif d'introduction d'échantillon, du dispositif d'ouverture/fermeture de bouchon, du dispositif d'injection d'acide, de l'agitateur thermique, du dispositif de vision, et du dispositif de pipetage,
le dispositif de commande est configuré pour recevoir une image d'une portion définie du tube contenant la solution d'échantillon en provenance du dispositif de vision, traiter l'image de la portion définie avec un programme de traitement d'image prédéfini, et détecter un taux de dissolution de l'échantillon.

6. Système de pré-traitement selon la revendication 1, dans lequel :
le dispositif préhenseur comporte en outre un corps de préhenseur (32) monté en rotation sur le bras principal du robot, et
la première unité de préhenseur est montée sur un côté du corps de préhenseur, et la seconde unité de préhenseur est montée sur l'autre côté du corps de préhenseur,
la première unité de préhenseur comporte :
des premier et second doigts de préhenseur (42a, 42b) mobiles l'un vers l'autre ou à l'opposé l'un de l'autre ;
une douille de guidage (74) ayant une forme cylindrique comportant une surface ouverte et une autre surface fermée et fixée au sein de portions de pointe de chacun des premier et second doigts de préhenseur ;
un premier poussoir (46a) ou un second poussoir (46b) disposé sur ladite surface ouverte de la douille de guidage et pouvant coulisser le long d'une surface périphérique interne de la douille de guidage ;
un arbre de guidage (76) s'étendant sur un côté à travers un orifice d'arbre de guidage formé sur l'autre surface fermée de la douille de guidage et relié au premier poussoir ou au second poussoir ; et
un ressort de guidage (78) supportant élastiquement le premier poussoir ou le second poussoir par rapport à la douille de guidage.

7. Système de pré-traitement selon la revendication 2, dans lequel :
le dispositif d'ouverture/fermeture de bouchon comporte :
une table de travail de bouchage (132) ayant un premier porte-tubes (134) agencé sur un côté de celle-ci et un second porte-tubes (136) agencé sur l'autre côté de celle-ci et pouvant tourner pour positionner l'un du premier porte-tubes et du second porte-tubes au niveau de l'une d'une première position où le tube est monté ou saisi et une seconde position où le bouchon de tube est couplé au corps de tube ou le bouchon de tube est séparé du corps de tube et positionner l'autre du premier porte-tubes et du second porte-tubes dans l'autre de la première position et de la seconde position ; et
un bloc de levage de support (146) se déplaçant vers le haut et vers le bas par un actionneur de levage d'unité de bouchon (150) ;
un support de préhenseurs de bouchon (144) monté en rotation sur le bloc de levage de support ;
des premier et second préhenseurs de bouchon (142a, 142b) montés sur le support de préhenseurs de bouchon, positionnés pour correspondre au bouchon de tube du tube dans la seconde position, et configurés pour se déplacer l'un vers l'autre pour saisir le bouchon de tube ou s'éloigner l'un de l'autre pour disposer le bouchon de tube ;
des premier et second préhenseurs de corps de tube (154a, 154b) configurés pour être positionnés pour correspondre au corps de tube du tube dans la seconde position, se déplacer l'un vers l'autre pour saisir le corps de tube, ou s'éloigner l'un de l'autre pour disposer le bouchon de tube ; et
un actionneur de rotation de bouchon (148) monté sur le bloc de levage de support, comportant une extrémité inférieure pénétrant à travers le bloc de levage de support et reliée au support de préhenseurs de bouchon, et configuré pour faire tourner le support de préhenseurs de bouchon dans une première direction de rotation pour séparer le bouchon de tube du corps de tube, et faire tourner le support de préhenseurs de bouchon dans une seconde direction de rotation, qui est une direction opposée à la première direction de rotation, pour coupler le bouchon de tube au corps de tube.

8. Système de pré-traitement selon la revendication 1, dans lequel :
le dispositif d'injection d'acide comporte :
une unité d'alimentation en acide (172) comportant une unité de pompage de liquide (182) configurée pour pomper du liquide contenu dans une pluralité de bouteilles de liquide (178) ;
une unité d'injection d'acide (176) comportant un corps de chambre d'injection d'acide ayant une chambre d'injection d'acide (186) formée dans celui-ci, une buse d'injection (200) montée sur la partie de montage de buse d'injection (193) à l'intérieur de la chambre d'injection d'acide et configurée pour communiquer avec l'unité de pompage de liquide pour injecter le pompage de liquide depuis l'unité de pompage de liquide dans le tube, et un actionneur de levage de buse (192) monté sur le corps de chambre d'injection d'acide et relié à la partie de montage de buse d'injection pour déplacer la partie de montage de buse d'injection vers le haut et vers le bas ; et
une unité chargeur de tube (174) configurée pour monter le tube dessus, incliner le tube monté pour insérer le tube dans la chambre d'injection d'acide, et faire tourner le tube monté incliné, et
lorsque le tube est incliné et tourne et est positionné dans la chambre d'injection d'acide, l'actionneur de levage de buse abaisse la partie de montage de buse d'injection et positionne la partie de montage de buse d'injection sur le tube, et la buse d'injection injecte le liquide pompé depuis l'unité de pompage de liquide dans le tube en rotation incliné.

9. Système de pré-traitement selon la revendication 1, dans lequel :
le dispositif de pipetage comporte :
un plateau de pointes de pipette (252) sur lequel sont montées une pluralité de pointes de pipette ;
une table de travail de pipetage (256) ayant un premier porte-tube de pipette (258) agencé sur un côté de celle-ci et un second porte-tube de pipette (260) agencé sur l'autre côté et étant rotative pour positionner l'un des premier et second portes-tube de pipette dans l'une d'une première position de tube de pipette où le tube est monté ou saisi et une seconde position de tube de pipette où une solution est collectée à partir du tube ou la solution est injectée dans le tube et positionner l'autre des premier et second portes-tube de pipette dans l'autre des première et seconde positions de tube de pipette ;
une unité de pipette (242) configurée pour monter un pointe de pipette à une position correspondant à un plateau de pointes de pipette et collecter une portion de la solution contenue dans un premier tube à une position équivalente à la table de travail de pipetage ou injecter la solution collectée dans un second tube ; et
une unité de déplacement de pipette (244) déplaçant l'unité de pipette entre une position correspondant au plateau de pointes de pipette et une position correspondant à la table de travail de pipetage.

10. Système de pré-traitement selon la revendication 1, dans lequel :
un test de composant métallique est effectué après la dissolution de l'échantillon dans le tube dans l'acide pour détecter le composant métallique contenu dans l'échantillon, et
le dispositif de vision comporte :
un rouleau d'entraînement (304) et un rouleau de soutien (306) configurés pour monter le tube contenant l'acide dans lequel l'échantillon est dissous et faire tourner le tube ;
un dispositif d'acquisition d'image (292) configuré pour être monté entre le rouleau d'entraînement et le rouleau de soutien pour acquérir une image inférieure du tube rotatif ;
un module d'éclairage (298) configuré pour irradier de la lumière vers le tube depuis un côté opposé au dispositif d'acquisition d'image par rapport au tube ; et
un dispositif de commande (280) configuré pour tester un taux de dissolution de l'échantillon en traitant l'image inférieure du tube acquise par le dispositif d'acquisition d'image, et
le dispositif de commande est configuré pour
détecter une zone de tube dans l'image de la portion définie du tube par l'intermédiaire d'un algorithme de vision basé sur des caractéristiques d'image,
appliquer un algorithme de reconnaissance de forme à la zone de tube pour détecter une région d'intérêt,
classer des pixels au sein de la région d'intérêt détectée selon une référence définie et attribuer des valeurs de pixel aux pixels classés, et
détecter le taux de dissolution de l'échantillon à l'aide des valeurs de pixel de chaque pixel.

11. Procédé de pré-traitement pour tester un composant métallique dans un échantillon, comprenant :
l'introduction, par un dispositif d'injection d'échantillon (110), de l'échantillon dans une tête de dosage dans
un premier tube ;
l'injection, par un dispositif d'injection d'acide (170), de l'acide dans le premier tube dans lequel l'échantillon est introduit ;
l'agitation, par un agitateur thermique (230), du premier tube contenant l'acide dans lequel l'échantillon est dissous et l'application de chaleur ;
l'acquisition, par un dispositif de vision (290), d'une image d'une portion définie du premier tube ;
le test, par un dispositif de commande (280), d'un taux de dissolution de l'échantillon en traitant une image de la portion définie du premier tube ; et
la dilution de la solution d'échantillon en réponse au fait que le taux de dissolution de l'échantillon est supérieur ou égal à un taux de dissolution défini.

12. Procédé de pré-traitement selon la revendication 11, comprenant en outre :
le retrait de la tête de dosage d'un porte-têtes de dosage par un robot ayant un dispositif préhenseur monté à une extrémité principale de celui-ci et le montage de la tête de dosage retirée sur un dispositif de levage d'unité d'introduction d'échantillon ;
le retrait du premier tube d'un porte-tubes par le robot équipé du dispositif préhenseur ;
la séparation, par un dispositif d'ouverture/fermeture de bouchon, d'un bouchon de tube du premier tube ; et
le montage, par le robot équipé du dispositif préhenseur, du premier tube, duquel le bouchon de tube est séparé, sur une coupelle porte-tube.

13. Procédé de pré-traitement selon la revendication 11, dans lequel :
le dispositif d'injection d'acide est configuré pour injecter du liquide dans le tube monté sur le dispositif d'injection d'acide tout en inclinant et en faisant tourner le tube.

14. Procédé de pré-traitement selon la revendication 11, dans lequel :
la dilution de la solution d'échantillon comporte :
l'injection, par le dispositif d'injection d'acide, d'eau distillée dans le premier tube pour diluer premièrement la solution d'échantillon ;
le transfert, par un dispositif de pipetage, d'une portion de la solution d'échantillon premièrement diluée dans le premier tube vers un second tube ; et
l'injection, par le dispositif d'injection d'acide, d'eau distillée dans le second tube pour diluer secondairement la solution d'échantillon.

15. Procédé de pré-traitement selon la revendication 11, dans lequel :
le test du taux de dissolution de l'échantillon par traitement de l'image de la portion définie du premier tube comporte :
la détection d'une zone de tube dans l'image de la portion définie du premier tube par l'intermédiaire d'un algorithme de vision basé sur des caractéristiques d'image ;
l'application d'un algorithme de reconnaissance de forme à la zone de tube pour détecter une région d'intérêt, et
le classement de pixels au sein de la région d'intérêt détectée selon une référence définie et l'attribution de valeurs de pixel aux pixels classés ; et
la détection du taux de dissolution de l'échantillon à l'aide des valeurs de pixel de chaque pixel.
